(19) Europäisches Patentamt
European Patent Office
Office européen des brevets

(11) EP 4 596 091 A1

(12) # EUROPEAN PATENT APPLICATION

published in accordance with Art. 153(4) EPC

(43) Date of publication:
**06.08.2025 Bulletin 2025/32**

(21) Application number: **23871811.8**

(22) Date of filing: **07.09.2023**

(51) International Patent Classification (IPC):
***B01D 61/36*** (2006.01) ***B01D 65/10*** (2006.01)
***B01D 69/00*** (2006.01) ***B01D 69/02*** (2006.01)
***B01D 69/10*** (2006.01) ***B01D 69/12*** (2006.01)
***B01D 71/02*** (2006.01) ***B01D 71/68*** (2006.01)
***B01D 71/70*** (2006.01) ***B32B 5/18*** (2006.01)
***B32B 27/00*** (2006.01) ***B32B 7/06*** (2019.01)

(52) Cooperative Patent Classification (CPC):
**B01D 61/36; B01D 65/10; B01D 69/00; B01D 69/02; B01D 69/10; B01D 69/12; B01D 71/02; B01D 71/68; B01D 71/70; B32B 5/18; B32B 7/06; B32B 27/00**

(86) International application number:
**PCT/JP2023/032765**

(87) International publication number:
**WO 2024/070574 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2022 JP 2022153131**
**08.03.2023 JP 2023035972**

(71) Applicant: **NITTO DENKO CORPORATION**
**Ibaraki-shi**
**Osaka 567-8680 (JP)**

(72) Inventors:
- **YANO, Hikaru**
**Ibaraki-shi, Osaka 567-8680 (JP)**
- **NAKANO, Takeshi**
**Ibaraki-shi, Osaka 567-8680 (JP)**
- **SUZUKI, Tatsuya**
**Ibaraki-shi, Osaka 567-8680 (JP)**
- **TANAKA, Akiko**
**Ibaraki-shi, Osaka 567-8680 (JP)**
- **OTSUKA, Masaya**
**Ibaraki-shi, Osaka 567-8680 (JP)**
- **MATSUDA, Mayu**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **PERVAPORATION MEMBRANE**

(57) The present invention provides a pervaporation membrane suitable for inhibiting a separation functional layer from peeling off a porous support when the pervaporation membrane is drawn from a wound body of the pervaporation membrane. The pervaporation membrane of the present invention includes: a separation functional layer including a silicone resin; and a porous support supporting the separation functional layer. For the pervaporation membrane, a peeling strength measured by a test below is 0.15 N/20 mm or more.

Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.

EP 4 596 091 A1

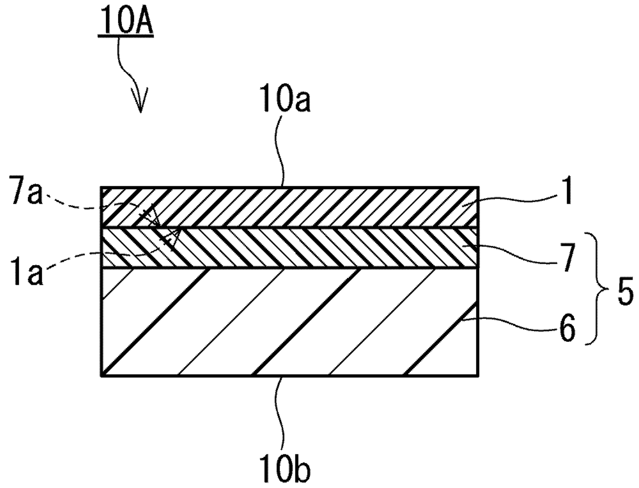


FIG.1A

## Description

TECHNICAL FIELD

The present invention relates to a pervaporation membrane.

BACKGROUND ART

A method using fermentation by a microorganism has been known as a method for obtaining a non-petroleum valuable substance. For example, there have been developed methods for producing a volatile organic compound (a fermented product), such as an alcohol, by fermenting a carbon source, such as glucose, by using a microorganism. The fermentation of a carbon source is carried out, for example, in an aqueous solution. In this method, the fermentation by a microorganism stops in some cases when the content of the fermented product in the aqueous solution increases. For continuous production of the fermented product by a microorganism, the fermented product needs to be separated from the aqueous solution.

One example of the method for separating a volatile organic compound from an aqueous solution containing the organic compound is a pervaporation method using a pervaporation membrane. The pervaporation method is suitable for separating a volatile organic compound from an aqueous solution containing various substances. Moreover, the pervaporation method tends to be able to reduce energy consumption and carbon dioxide emissions compared to a distillation method. The material of the pervaporation membrane used in the pervaporation method is specifically, for example, a silicone resin (e.g., Patent Literature 1).

CITATION LIST

Patent Literature

Patent Literature 1: JP 4899122 B2

SUMMARY OF INVENTION

Technical Problem

A pervaporation membrane desirably includes a separation functional layer including a silicone resin and, in terms of enhancing the strength of the pervaporation membrane, a porous support supporting the separation functional layer. However, according to studies by the present inventors, for example, in the case where a pervaporation membrane produced by roll-to-roll processing and including a porous support is stored as a wound body, a separation functional layer thereof is liable to peel off the porous support when the pervaporation membrane is drawn from the wound body of the pervaporation membrane.

Therefore, the present invention aims to provide a pervaporation membrane suitable for inhibiting a separation functional layer from peeling off a porous support when the pervaporation membrane is drawn from a wound body of the pervaporation membrane.

Solution to Problem

As a result of intensive studies, the present inventors have newly found that a peeling strength measured between a separation functional layer and a porous support at a peel angle of 180° can be used as a measure of peeling that occurs when a pervaporation membrane is drawn from a wound body of the pervaporation membrane, and have completed the present invention.

The present invention provides a pervaporation membrane including:

a separation functional layer including a silicone resin; and
a porous support supporting the separation functional layer, wherein
a peeling strength measured by a test below is 0.15 N/20 mm or more.
Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.

Advantageous Effects of Invention

The present invention can provide a pervaporation membrane suitable for inhibiting a separation functional layer from peeling off a porous support when the pervaporation membrane is drawn from a wound body of the pervaporation membrane.

BRIEF DESCRIPTION OF DRAWINGS

FIG. 1A is a cross-sectional view schematically showing a pervaporation membrane of Embodiment 1.
FIG. 1B is a diagram for illustrating a method for manufacturing the pervaporation membrane of Embodiment 1.
FIG. 1C is a diagram for illustrating the method for manufacturing the pervaporation membrane of Embodiment 1.
FIG. 2A is a cross-sectional view schematically showing a pervaporation membrane of Embodiment 2.
FIG. 2B is a diagram for illustrating a method for manufacturing the pervaporation membrane of Embodiment 2.
FIG. 2C is a diagram for illustrating the method for manufacturing the pervaporation membrane of Embodiment 2.
FIG. 3 is a cross-sectional view schematically showing a pervaporation membrane of Embodiment 3.
FIG. 4A is a cross-sectional view schematically showing a pervaporation membrane of Embodiment 4.
FIG. 4B is a diagram for illustrating a method for manufacturing the pervaporation membrane of Embodiment 4.
FIG. 4C is a diagram for illustrating the method for manufacturing the pervaporation membrane of Embodiment 4.
FIG. 5 is a cross-sectional view schematically showing a pervaporation membrane of Embodiment 5.
FIG. 6 is a cross-sectional view schematically showing a pervaporation membrane of Embodiment 6.
FIG. 7 is a schematic cross-sectional view showing a membrane separation device including a pervaporation membrane.
FIG. 8 is a perspective view schematically showing a modification of the membrane separation device.
FIG. 9 is a schematic configuration diagram showing an example of a membrane separation system.

DESCRIPTION OF EMBODIMENTS

A pervaporation membrane according to a first aspect of the present invention includes:

a separation functional layer including a silicone resin; and
the porous support supporting the separation functional layer, wherein
a peeling strength measured by a test below is 0.15 N/20 mm or more.

Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.
According to a second aspect of the present invention, for example, for the pervaporation membrane according to the first aspect, the peeling strength is 0.5 N/20 mm or more.
According to a third aspect of the present invention, for example, for the pervaporation membrane according to the first or second aspect, an adhesion strength between the separation functional layer and the porous support is 0.01 kN/m or more, the adhesion strength being measured with SAICAS (Surface And Interfacial Measuring Analysis System).
According to a fourth aspect of the present invention, for example, in the pervaporation membrane according to any one of the first to third aspects, the porous support has a surface facing the separation functional layer, the surface being modified by a surface modification treatment.
According to a fifth aspect of the present invention, for example, for the pervaporation membrane according to the fourth aspect, the surface modification treatment is a corona treatment.
According to a sixth aspect of the present invention, for example, in the pervaporation membrane according to the fourth or fifth aspect, the silicone resin is formed from a condensation type silicone resin composition.
According to a seventh aspect of the present invention, for example, in the pervaporation membrane according to any one of the first to third aspects, the porous support includes a primer layer in direct contact with the separation functional layer, and the primer layer is bonded to the silicone resin.
According to an eighth aspect of the present invention, for example, in the pervaporation membrane according to the seventh aspect, the silicone resin is formed from an addition type silicone resin composition.
According to a ninth aspect of the present invention, for example, in the pervaporation membrane according to any one of the first to fifth aspects, the silicone resin is formed from a silicone resin composition including a polyorganosiloxane, and

the silicone resin composition includes a compound including: a reactive group F1 capable of reacting with the polyorganosiloxane; and a reactive group F2 capable of reacting with a surface of the porous support, the surface facing the separation functional layer.

According to a tenth aspect of the present invention, for example, in the pervaporation membrane according to any one of the first to third aspects, the porous support has a surface facing the separation functional layer and including a plurality of opening portions, and

an average diameter of the plurality of opening portions is 0.5 μm or more.

According to an eleventh aspect of the present invention, for example, in the pervaporation membrane according to the tenth aspect, the surface is bonded to the silicone resin.

According to a twelfth aspect of the present invention, for example, in the pervaporation membrane according to any one of the first to third aspects, the separation functional layer further includes a filler.

According to a thirteenth aspect of the present invention, for example, in the pervaporation membrane according to the twelfth aspect, the filler includes at least one selected from the group consisting of zeolite and silica.

According to a fourteenth aspect of the present invention, for example, in the pervaporation membrane according to any one of the first to third aspects, the porous support includes a main portion and a fine porous layer placed on the main portion, and the fine porous layer includes polysulfone.

According to a fifteenth aspect of the present invention, for example, in the pervaporation membrane according to the fourteenth aspect, the silicone resin is formed from a silicone resin composition having a solvent content of 10 wt% or less.

According to a sixteenth aspect of the present invention, for example, the pervaporation membrane according to any one of the first to fifteenth aspects is configured to be used to separate a volatile organic compound from an aqueous solution containing the organic compound.

According to a seventeenth aspect of the present invention, for example, in the pervaporation membrane according to the sixteenth aspect, the organic compound is a fermented product generated by a microorganism.

The present invention will be described below in detail. The following description is not intended to limit the present invention to a specific embodiment.

<Embodiment of pervaporation membrane>

A pervaporation membrane of the present embodiment includes: a separation functional layer including a silicone resin; and a porous support supporting the separation functional layer. The separation functional layer has, for example, a surface in direct contact with the porous support and a surface exposed to the outside of the pervaporation membrane. The pervaporation membrane is composed, for example, only of the separation functional layer and the porous support. The pervaporation membrane is typically a membrane (separation membrane) preferentially permeable to a volatile organic compound C in an aqueous solution S.

For the pervaporation membrane of the present embodiment, a peeling strength A1 measured by Test 1 below is 0.15 N/20 mm or more. This high peeling strength A1 can sufficiently inhibit the separation functional layer from peeling off the porous support when the pervaporation membrane is drawn from a wound body of the pervaporation membrane.

Test 1: The pervaporation membrane is cut to 20 mm in width and 150 mm in length to give a test piece. The separation functional layer of the test piece is peeled off the porous support of the test piece at a peel angle of 180° and a tensile speed of 300 mm/min.

Test 1 above is carried out specifically by the following method. First, the pervaporation membrane to be evaluated is cut to 20 mm in width and 150 mm in length to give a test piece. Then, the entire surface of the porous support of the test piece is stacked on an acrylic test plate with a double-faced tape (e.g., No.5000NS manufactured by Nitto Denko Corporation) therebetween, and a 2 kg roller is moved back and forth once to press-bond these. The acrylic test plate has, for example, dimensions of 150 mm in width and 150 mm in length. Then, in a direction from one end of the test piece toward the other end, the separation functional layer is pulled by hand to be peeled off the porous support by 90 mm only. A commercially-available tensile tester is used to grip the peeled portion of the separation functional layer and a portion near the one end of the test piece with chucks, and the rest of the separation functional layer is peeled off the porous support at a peel angle of 180° and a tensile speed of 300 mm/min. The average of peel force during the peeling is determined as the peeling strength A1. For the tensile tester, an initial chuck-to-chuck distance is 150 mm. Test 1 is carried out in an atmosphere at 25°C.

The peeling strength A1 is preferably 0.2 N/20 mm or more, and may be 0.3 N/20 mm or more, 0.4 N/20 mm or more, 0.5 N/20 mm or more, 0.6 N/20 mm or more, 0.7 N/20 mm or more, 0.8 N/20 mm or more, or even 1.0 N/20 mm or more. The upper limit of the peeling strength A1 is, for example, but not particularly limited to, 20 N/20 mm.

In Test 1 above, the separation functional layer is sometimes fixed sufficiently firmly to the porous support and thus cannot be peeled off the porous support by hand; if an attempt is made to forcibly peel the separation functional layer off, the separation functional layer can be broken. It is inferred that this phenomenon is attributable to the fact that the above

peeling strength A1 (N/20 mm) is larger than a strength at break B1 (N/20 mm) of the separation functional layer. Therefore, in the above case, the peeling strength A1 can be considered a value equal to or greater than the strength at break B1 separately determined for the separation functional layer (i.e., the peeling strength A1 (N/20 mm) ≥ the strength at break B1 (N/20 mm)).

The strength at break B1 of the separation functional layer can be determined by the following method. First, a layer having the same composition and the same thickness as those of the separation functional layer included in the pervaporation membrane is formed on a release liner, and the release liner is removed to give a free-standing membrane of the separation functional layer. Then, the free-standing membrane of the separation functional layer is cut to 20 mm in width and 60 mm in length to give a test piece. The test piece is set on a commercially-available tensile tester, and a tensile test is performed under the following conditions.

•Measurement conditions

Temperature: 25°C
Tensile direction: the longitudinal direction of the test piece
Initial chuck-to-chuck distance: 20 mm
Tensile speed: 300 mm/min

A strength B2 (N/mm$^2$) at the time of break of the test piece is determined by the tensile test. The strength at break B1 (N/20 mm) can be calculated from the strength B2 (N/mm$^2$), the thickness B3 (mm) of the separation functional layer, and the width (20 mm) of the test piece by the following equation.

$$\text{Strength at break B1 (N/20 mm)} = \text{Strength B2 (N/mm}^2\text{)} \times \text{Thickness B3 (mm)} \times 20 \times (1/20)$$

Additionally, for the pervaporation membrane of the present embodiment, an adhesion strength between the separation functional layer and the porous support is preferably 0.01 kN/m or more, the adhesion strength being measured with SAICAS (Surface And Interfacial Measuring Analysis System).

The above adhesion strength can be measured specifically by the following method. First, the pervaporation membrane to be evaluated is cut to 10 mm in length and 10 mm in width to give a test piece. The test piece is set on SAICAS. The SAICAS has a cutting blade for cutting, which is made of monocrystalline diamond, has a blade width of 1 mm, and has a rake angle of 10°. Then, a travel speed of the cutting blade in the horizontal direction is set at 10 μm/sec, and a travel speed thereof in the vertical direction is set at 0.5 μm/sec. The test piece is cut with the cutting blade. At the moment when the cutting blade reaches the interface between the separation functional layer and the porous support, the cutting blade starts to move only in the horizontal direction to peel the separation functional layer off the porous support. A peeling strength P for this peeling is calculated by the following equation. The resulting calculation value can be considered the adhesion strength. In the following formula, $F_H$ represents a load applied to move the cutting blade in the horizontal direction at the interface between the separation functional layer and the porous support, and W represents the blade width of the cutting blade.

$$P\ (\text{kN/m}) = F_H\ (\text{kN})/W\ (\text{m})$$

The adhesion strength between the separation functional layer and the porous support is preferably 0.03 kN/m or more, and may be 0.05 kN/m or more, 0.08 kN/m or more, 0.1 kN/m or more, 0.15 kN/m or more, or even 0.2 kN/m or more. The upper limit of the adhesion strength is, for example, but not particularly limited to, 1 kN/m.

Moreover, for the pervaporation membrane of the present embodiment, a peeling strength A2 measured by Test 2 below is preferably smaller than the above peeling strength A1. In this case, peeling of the separation functional layer off the porous support can further be inhibited when the pervaporation membrane is drawn from a wound body of the pervaporation membrane.

Test 2: Two test pieces T1 and T2 each having dimensions of 20 mm in width and 150 mm in length are cut out of the pervaporation membrane. The two test pieces T1 and T2 are stacked such that the separation functional layer of the test piece T1 and the porous support of the test piece T2 are in contact with each other, and a 2 kg roller is moved back and forth once to press-bond these. The test piece T2 is peeled off the test piece T1 at a peel angle of 180° and a tensile speed of 300 mm/min.

In another aspect, the present invention provides a pervaporation membrane including:

a separation functional layer including a silicone resin; and
a porous support supporting the separation functional layer, wherein
the peeling strength A1 measured by Test 1 above is larger than the peeling strength A2 measured by Test 2 above.

Test 2 above is carried out specifically by the following method. First, two test pieces T1 and T2 each having dimensions of 20 mm in width and 150 mm in length are cut out of the pervaporation membrane to be evaluated. Then, the entire surface of the porous support of the test piece T1 is stacked on an acrylic test plate with a double-faced tape (e.g., No.5000NS manufactured by Nitto Denko Corporation) therebetween, and a 2 kg roller is moved back and forth once to press-bond these. The acrylic test plate has, for example, dimensions of 150 mm in width and 150 mm in length. Next, the two test pieces T1 and T2 are stacked such that the separation functional layer of the test piece T1 and the porous support of the test piece T2 are in contact with each other, and a 2 kg roller is moved back and forth once to press-bond these. Then, in a direction from one end of the test piece T1 toward the other end, the test piece T2 is pulled by hand to be peeled off the test piece T1 by 90 mm only. A commercially-available tensile tester is used to grip the peeled portion of the test piece T2 and a portion near the one end of the test piece T1 with chucks, and the rest of the test piece T2 is peeled off the test piece T1 at a peel angle of 180° and a tensile speed of 300 mm/min. The average of peel force during the peeling is determined as the peeling strength A2. For the tensile tester, an initial chuck-to-chuck distance is 150 mm. Test 2 is carried out in an atmosphere at 25°C.

The peeling strength A2 is, for example, less than 0.15 N/20 mm, and may be 0.1 N/20 mm or less, 0.05 N/20 mm or less, or even 0.01 N/20 mm or less. The peeling strength A2 may be substantially 0 N/20 mm.

In the present embodiment, when Test 3 below is carried out for the pervaporation membrane, peeling of the separation functional layer off the porous support preferably cannot be confirmed visually. According to studies by the present inventors, the state of the pervaporation membrane (the test piece T1) after Test 3 tends to coincide well with the state of the pervaporation membrane after drawing the pervaporation membrane from a wound body of the pervaporation membrane.

Test 3: Two test pieces T1 and T2 each having dimensions of 20 mm in width and 150 mm in length are cut out of the pervaporation membrane. The two test pieces T1 and T2 are stacked such that the separation functional layer of the test piece T1 and the porous support of the test piece T2 are in contact with each other. The test piece T1 is fixed such that the test piece T2 is on top of the test piece T1. A300 g weight is placed on one end of the test piece T2. The other end of the test piece T2 is gripped. The test piece T2 is moved on the test piece T1 in the horizontal direction at 10 mm/sec. Whether the separation functional layer has peeled off is visually examined for the test piece T1 that the test piece T2 passed.

Test 3 above is carried out specifically by the following method. First, two test pieces T1 and T2 each having dimensions of 20 mm in width and 150 mm in length are cut out of the pervaporation membrane to be evaluated. Then, the entire surface of the porous support of the test piece T1 is stacked on an acrylic test plate with a double-faced tape (e.g., No.5000NS manufactured by Nitto Denko Corporation) therebetween, and a 2 kg roller is moved back and forth once to press-bond these. The acrylic test plate has, for example, dimensions of 150 mm in width and 150 mm in length. Next, the two test pieces T1 and T2 are stacked such that the separation functional layer of the test piece T1 and the porous support of the test piece T2 are in contact with each other, and a 2 kg roller is moved back and forth once to press-bond these.

Next, the test piece T1 is fixed such that the test piece T2 is on top of the test piece T1. For example, the test piece T1 is fixed by fixing the acrylic test plate to a workbench. Subsequently, a 300 g weight is placed on one end (specifically, one end of the test piece T2 in the longitudinal direction) of the test piece T2. The weight has, for example, a cylindrical tube shape or a cylindrical column shape. The other end of the test piece T2 is gripped, and then the test piece T2 is moved on the test piece T1 in the horizontal direction (specifically, the longitudinal direction of the test piece T2) at 10 mm/sec. Whether the separation functional layer has peeled off is visually examined for the test piece T1 that the test piece T2 (specifically, the one end thereof on which the weight is placed) passed. Test 3 is carried out in an atmosphere at 25°C.

Embodiments 1 to 6 which are preferred examples of the present embodiment will be hereinafter described with the use of FIGS. 1A to 6. The elements common between Embodiments 1 to 6 are denoted by the same reference characters, and the descriptions of such elements may be omitted. The description of each of Embodiments 1 to 6 is applicable to the others, unless there is technical inconsistency. The configurations of Embodiments 1 to 6 may be combined with each other, unless there is technical inconsistency.

[Embodiment 1]

As shown in FIG. 1A, a pervaporation membrane 10A of Embodiment 1 includes a separation functional layer 1 and a porous support 5. The separation functional layer 1 has a surface 1a in direct contact with the porous support 5. The porous support 5 includes, for example, a main portion 6 and a fine porous layer 7 placed on the main portion 6. In the pervaporation membrane 10A, the fine porous layer 7 is positioned between the main portion 6 and the separation functional layer 1, and is in direct contact with both the main portion 6 and the separation functional layer 1. Specifically, the fine porous layer 7 has a surface 7a in direct contact with the separation functional layer 1. The peeling strength A1

measured by Test 1 above corresponds to a peeling strength between the surface 1a of the separation functional layer 1 and the surface 7a of the fine porous layer 7.

(Separation functional layer)

The separation functional layer 1 is a layer, for example, preferentially permeable to the organic compound C in the above aqueous solution S, and is typically a dense layer (non-porous layer) in which no pores can be confirmed with a scanning electron microscope (SEM) at 5000-fold magnification.

As described above, the separation functional layer 1 includes a silicone resin. In Embodiment 1, the silicone resin is formed from a condensation type silicone resin composition. In Embodiment 1, the condensation type silicone resin composition is used, so that, as described later, the porous support 5 (specifically, the fine porous layer 7) can be bonded to the silicone resin formed from the condensation type silicone resin composition.

The condensation type silicone resin composition is a silicone resin composition curable by a condensation reaction. The condensation type silicone resin composition includes, for example, a polyorganosiloxane P1 having a silanol (SiOH) group and a silane compound P2 having a functional group, such as an alkoxy group, an alkenyloxy group, an acyloxy group, an amino group, a ketoxime group, or an amide group. The condensation type silicone resin composition may further include a curing catalyst, or may be free of a curing catalyst. The condensation type silicone resin composition may be one produced by adding a curing catalyst to a commercially-available silicone resin composition.

The silicone resin can be formed, for example, by subjecting the condensation type silicone resin composition to a heating treatment by which a reaction (condensation reaction) between the silanol group in the polyorganosiloxane P1 and the above functional group in the silane compound P2 proceeds. In this condensation reaction, the silane compound P2 functions as a crosslinking agent.

The number of silanol groups in the polyorganosiloxane P1 is, for example, two or more. The silanol group is located, for example, at a terminal of the polyorganosiloxane P1. An alkyl group, such as a methyl group or an ethyl group, a phenyl group, or the like may be introduced as a substituent of a side chain to the polyorganosiloxane P1.

The polyorganosiloxane P1 is, for example, one formed by introducing a silanol group to a polyorganosiloxane, which is, for example, a polyalkylalkylsiloxane, such as polydimethylsiloxane, polydiethylsiloxane, or polymethylethylsiloxane; a polyalkylarylsiloxane; or poly(dimethylsiloxane-diethylsiloxane).

A weight-average molecular weight of the polyorganosiloxane P1 is, for example, 1,000 or more, and may be 10,000 or more, 100,000 or more, 200,000 or more, 300,000 or more, or even 400,000 or more. The upper limit of the weight-average molecular weight of the polyorganosiloxane P1 is, for example, but not particularly limited to, 1,000,000.

As described above, the silane compound P2 has a functional group, such as an alkoxy group, an alkenyloxy group, an acyloxy group, an amino group, a ketoxime group, or an amide group. Examples of the alkoxy group include a methoxy group and an ethoxy group. Examples of the alkenyloxy group include an isopropenyloxy group. Examples of the acyloxy group include an acetoxy group. Examples of the amino group include a dimethylamino group, a diethylamino group, and an ethylmethylamino group. Examples of the ketoxime group include an acetoxime group and a methylethylketoxime group. Examples of the amide group include an acetamide group, an N-methylacetamide group, and an N-ethylacetamide group. The number of functional groups in the silane compound P2 is, for example, two or more. Specifically, the silane compound P2 preferably includes an alkoxysilyl group as the alkoxy group.

The silane compound P2 may be a low-molecular compound having a molecular weight of around 1000 or less, or may be a polymer compound having a polysiloxane framework.

The curing catalyst is, for example, a tin-based catalyst. Examples of the tin-based catalyst include organic tin catalysts, such as dibutyltin dilaurate, dibutyltin diacetate, and dibutyltin dioctate.

The condensation type silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The condensation type silicone resin composition may be of a solvent-free type which is free of a solvent, such as an organic solvent.

The separation functional layer 1 may include the silicone resin as its main component, or may be substantially composed only of the silicone resin. The term "main component" means a component having a largest content in the separation functional layer 1 by weight.

A thickness of the separation functional layer 1 is, for example, 200 μm or less, and may be 100 μm or less, or even 80 μm or less. The thickness of the separation functional layer 1 may be 1.0 μm or more, 10 μm or more, or even 30 μm or more.

(Porous support)

As described above, the porous support 5 includes, for example, the main portion 6 and the fine porous layer 7. The porous support 5 is typically an ultrafiltration membrane.

In Embodiment 1, the porous support 5 has a surface (the surface 7a of the fine porous layer 7) facing the separation functional layer, the surface being modified by a surface modification treatment. In other words, the surface 7a of the fine porous layer 7 is modified by a surface modification treatment. The surface modification treatment is, for example, a corona treatment, a plasma treatment, an excimer treatment, or a frame treatment, and is preferably a corona treatment.

The main portion 6 is, for example, a fibrous structure, such as a woven fabric or a non-woven fabric, and is typically a non-woven fabric. Examples of a fiber included in the fibrous structure include: natural fibers, such as wood pulp, cotton, and hemp (e.g., Manila hemp); and chemical fibers (synthetic fibers), such as polyester fiber, rayon, vinylon, acetate fiber, polyvinyl alcohol (PVA) fiber, polyamide fiber, polyolefin fiber, and polyurethane fiber. The main portion 6 is, for example, a non-woven fabric formed of polyester fiber. The main portion 6 has, for example, an average pore diameter of 1 $\mu$m to 50 $\mu$m.

Examples of the material of the fine porous layer 7 include fluorine resins, such as polyvinylidene fluoride and polytetrafluoroethylene; polyarylethersulfones, such as polysulfone and polyethersulfone; and polyimides. The fine porous layer 7 has, for example, an average pore diameter of 0.01 $\mu$m to 0.4 $\mu$m.

A thickness of the porous support 5 is, for example, but not particularly limited to, 10 $\mu$m or more, and may be 50 $\mu$m or more, or even 100 $\mu$m or more. The thickness of the porous support 5 is, for example, 300 $\mu$m or less, and may be 200 $\mu$m or less.

(Pervaporation membrane manufacturing method)

The pervaporation membrane 10A can be produced, for example, by the following method. First, as shown in FIG. 1B, the surface modification treatment is performed by irradiating the surface 7a of the fine porous layer 7 of the porous support 5 with an active energy ray 15. Specific examples of the active energy ray 15 include electron beam, ionic beam, plasma beam, and ultraviolet. By the surface modification treatment, a large number of hydroxy groups are introduced to the surface 7a of the fine porous layer 7.

Next, a coating liquid containing a material of the separation functional layer 1 is prepared. The coating liquid is, for example, the silicone resin composition (condensation type silicone resin composition). Next, as shown in FIG. 1C, the coating liquid is applied to the surface 7a of the fine porous layer 7 to form a coating film 11. The coating film 11 is cured to form the separation functional layer 1, and thus the pervaporation membrane 10A is obtained (FIG. 1A). The curing of the coating film 11 can be performed at ordinary temperature or in a heated environment.

In the case of curing the coating film 11 by heating, conditions for heating the coating film 11 are not limited to particular conditions. For example, the temperature at which the coating film 11 is heated may be 80°C or higher, 90°C or higher, 100°C or higher, or even 120°C or higher. The higher the heating temperature for the coating film 11 is, the more sufficiently a curing reaction of the components in the silicone resin composition proceeds. The upper limit of the heating temperature of the coating film 11 is, for example, but not particularly limited to, 200°C. The heating time for the coating film 11 can be adjusted as appropriate according to the composition of the silicone resin composition used.

The pervaporation membrane 10A may be produced by roll-to-roll processing. That is, the surface modification treatment and the formation of the separation functional layer 1 may be performed while the porous support 5 having a long length is being drawn from a wound body of the porous support 5 and conveyed. Furthermore, the resulting pervaporation membrane 10A may be wound to produce a wound body of the pervaporation membrane 10A. Roll-to-roll processing is suitable for mass production of the pervaporation membrane 10A.

In Embodiment 1, a large number of hydroxy groups is introduced to the surface 7a of the fine porous layer 7 by the surface modification treatment. Because of this, by the heating treatment of the coating film 11, a portion of the silane compound P2 included in the condensation type silicone resin composition reacts not only with the silanol group in the polyorganosiloxane P1 but also with the hydroxy group on the surface 7a of the fine porous layer 7. Consequently, the fine porous layer 7 can be bonded to the silicone resin formed from the condensation type silicone resin composition via a covalent bond. Since the porous support 5 (the fine porous layer 7) is bonded to the silicone resin, the pervaporation membrane 10A of Embodiment 1 is likely to have a large peeling strength A1.

(Application of pervaporation membrane)

A suitable application of the pervaporation membrane 10A of the present embodiment is, for example, to separate the volatile organic compound C from the aqueous solution S containing the organic compound C. The organic compound C is not limited to a particularly one as long as the organic compound C has volatility. An organic compound

having volatility herein refers to, for example, an organic compound having a boiling point of 20°C to 260°C under the atmospheric pressure (101.325 kPa). Note that the organic compound C is, for example, one that, at high concentration in the solution, causes formation of an aqueous phase containing water as its main component and an organic phase having a higher content of organic compound C than that in the aqueous phase. The organic compound C may be one that does not cause formation of an aqueous phase and an organic phase.

The number of carbon atoms in the organic compound C is, for example, but not particularly limited to, 10 or less, and may be 8 or less, 6 or less, or even 4 or less. The lower limit of the number of carbon atoms in the organic compound C may be 1 or 2. The organic compound C has, for example, an oxygen-containing functional group, such as a hydroxyl group, a carbonyl group, an ether group, and an ester group. In the organic compound C, the number of oxygen-containing functional groups is typically one.

Examples of the organic compound C include an alcohol, a ketone, and an ester. The organic compound C is typically an alcohol. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol include methanol, ethanol, n-propanol, isopropanol, n-butanol, 2-butanol, isobutanol, t-butanol, and n-pentanol. Examples of the aryl alcohol include phenol.

The ketone may be a dialkyl ketone composed only of an alkyl group and a carbonyl group. Examples of the dialkyl ketone include methyl ethyl ketone (MEK) and acetone.

The ester may be an aliphatic alkyl ester composed only of an alkyl group and an ester group. Examples of the aliphatic alkyl ester include ethyl acetate.

The organic compound C is not limited to those mentioned above. The organic compound C may be an aromatic hydrocarbon, such as benzene, toluene, or xylene.

The aqueous solution S may contain one organic compound C, or two or more organic compounds C. The content of the organic compound C in the aqueous solution S is, for example, 0.5 wt% or more, and may be 1 wt% or more, 2 wt% or more, or even 5 wt% or more. The upper limit of the content of the organic compound C is, for example, but not particularly limited to, 50 wt%.

The organic compound C may be a fermented product generated by fermentation of a carbon source by a microorganism, or may be an alcohol (bioalcohol) generated by a microorganism. That is, the aqueous solution S may be a fermented solution containing the organic compound C as the fermented product. The aqueous solution S is not limited to the fermented solution and may be a waste solution or waste water discharged from a chemical plant or the like.

The aqueous solution S may further contain an additional component, such as the microorganism by which the fermented product is generated, the carbon source, a nitrogen source, and an inorganic ion, other than water and the organic compound C. The microorganism by which the fermented product is generated is typically a bacterium. Examples of the carbon source include polysaccharides, such as starch, and monosaccharides, such as glucose.

(Properties of pervaporation membrane)

A separation factor of the pervaporation membrane 10A for the organic compound C with respect to water is not limited to a particular one. In one example, the separation factor $\alpha$ of the pervaporation membrane 10A for n-butanol (BuOH) with respect to water is, for example, 10 or more, and may be 15 or more, 20 or more, 25 or more, 30 or more, or even 40 or more. The upper limit of the separation factor $\alpha$ is, for example, 100.

The separation factor $\alpha$ can be measured by the following method. In a state where a liquid mixture consisting of BuOH and water is in contact with one surface (e.g., a principal surface 10a of the pervaporation membrane 10A on the separation functional layer side) of the pervaporation membrane 10A, a space adjacent to the other surface (e.g., a principal surface 10b of the pervaporation membrane 10A on the porous support side) of the pervaporation membrane 10A is decompressed. A permeated fluid having permeated through the pervaporation membrane 10A is thus obtained. A weight ratio of water and a weight ratio of BuOH in the permeated fluid are measured. In the above process, a content of BuOH in the liquid mixture is 1.0 wt%. The liquid mixture in contact with the pervaporation membrane 10A has a temperature of 30°C. The space adjacent to the other surface of the pervaporation membrane 10A is decompressed to 15 hPa. The separation factor $\alpha$ can be calculated by the following equation. In the following equation, $X_A$ and $X_B$ are respectively a weight ratio of BuOH and that of water in the liquid mixture. The symbols $Y_A$ and $Y_B$ are respectively the weight ratio of BuOH and that of water in the permeated fluid having permeated through the pervaporation membrane 10A.

$$\text{Separation factor } \alpha = (Y_A/Y_B)/(X_A/X_B)$$

Under the above measurement conditions for the separation factor $\alpha$, a flux of the BuOH having permeated through the pervaporation membrane 10A is, for example, but not particularly limited to, 0.01 (g/min/m$^2$) to 10.0 (g/min/m$^2$).

[Embodiment 2]

As shown in FIG. 2A, a pervaporation membrane 10B of Embodiment 2 includes the separation functional layer 1 and the porous support 5. The porous support 5 includes the main portion 6, the fine porous layer 7, and a primer layer 8 in this order. In the pervaporation membrane 10B, the primer layer 8 is positioned between the fine porous layer 7 and the separation functional layer 1, and is in direct contact with both the fine porous layer 7 and the separation functional layer 1. Specifically, the primer layer 8 has a surface 8a in direct contact with the fine porous layer 7 and a surface 8b in direct contact with the separation functional layer 1. The peeling strength A1 measured in Test 1 above corresponds to a peeling strength between the surface 1a of the separation functional layer 1 and the surface 8b of the primer layer 8.

(Separation functional layer)

In Embodiment 2, the silicone resin is, for example, formed from an addition type silicone resin composition. In some cases, the silicone resin may be formed from the condensation type silicone resin composition described above in Embodiment 1 or a UV-curable silicone resin composition.

[Addition type silicone resin composition]

The addition type silicone resin composition is a silicone resin composition curable by an addition reaction. The addition type silicone resin composition includes, for example, a polyorganosiloxane P3 having an alkenyl group and a polyorganosiloxane P4 having a hydrosilyl (SiH) group. The addition type silicone resin composition preferably further includes a curing catalyst (hydrosilylation catalyst). The addition type silicone resin composition may be one produced by adding a curing catalyst to a commercially-available silicone resin composition. The addition type silicone resin composition may be free of a curing catalyst.

The silicone resin can be formed, for example, by subjecting the addition type silicone resin composition to a heating treatment by which a reaction (hydrosilylation reaction) between the alkenyl group in the polyorganosiloxane P3 and the hydrosilyl group in the polyorganosiloxane P4 proceeds. In this hydrosilylation reaction, the polyorganosiloxane P4 functions as a crosslinking agent.

The alkenyl group of the polyorganosiloxane P3 is, for example, a vinyl group or a hexenyl group. The number of alkenyl groups in the polyorganosiloxane P3 is, for example, two or more. The alkenyl group is located, for example, at a terminal of the polyorganosiloxane P3.

The polyorganosiloxane P3 is, for example, one formed by introducing an alkenyl group to any of the polyorganosiloxanes described for the polyorganosiloxane P1.

A weight-average molecular weight of the polyorganosiloxane P3 is, for example, 1,000 or more, and may be 10,000 or more, 100,000 or more, 200,000 or more, 300,000 or more, or even 400,000 or more. The larger the weight-average molecular weight of the polyorganosiloxane P3 is, the better separation properties the pervaporation membrane 10B is likely to have. The upper limit of the weight-average molecular weight of the polyorganosiloxane P3 is, for example, but not particularly limited to, 1,000,000.

The number of hydrosilyl groups in the polyorganosiloxane P4 is, for example, two or more. The hydrosilyl group may be located at a terminal of the polyorganosiloxane P4, or may be included in a main chain of the polyorganosiloxane P4.

Examples of the polyorganosiloxane P4 include polymethyl hydrogen siloxane, poly(dimethylsiloxane-methyl hydrogen siloxane), and hydrosilyl-terminated polydimethylsiloxane.

A weight-average molecular weight of the polyorganosiloxane P4 is, for example, 100 or more, and may be 10,000 or more. The larger the weight-average molecular weight of the polyorganosiloxane P4 is, the better separation properties the pervaporation membrane 10B is likely to have. The upper limit of the weight-average molecular weight of the polyorganosiloxane P4 is, for example, but not particularly limited to, 1,000,000.

A weight ratio P4/P3 of the polyorganosiloxane P4 to the polyorganosiloxane P3 is, for example, 500 wt% or less, and may be 100 wt% or less, 50 wt% or less, 20 wt% or less, 10 wt% or less, or even 5 wt% or less. The lower the weight ratio P4/P3 is, the more likely the peeling strength A1 is to increase. The lower limit of the weight ratio P4/P3 is, for example, 0.01 wt% or more.

The curing catalyst is, for example, a platinum-based catalyst. In other words, the addition type silicone resin composition may include a curing catalyst including platinum. Specific examples of the platinum-based catalyst include chloroplatinic acid, an olefin complex of platinum, and an olefin complex of chloroplatinic acid. As described above, the addition type silicone resin composition may be free of a curing catalyst.

The addition type silicone resin composition may include a compound from which a catalytically active species that catalyzes an addition reaction is produced by irradiation with an active energy ray, such as ultraviolet (UV). An addition reaction can proceed, for example, by UV irradiation of the addition type silicone resin composition including such a

compound.

The addition type silicone resin composition may further include an organic solvent in addition to the above components. Examples of the organic solvent include those described above for the condensation type silicone resin composition. The addition type silicone resin composition may be of a solvent-free type which is substantially free of a solvent, such as an organic solvent.

[UV-curable silicone resin composition]

The UV-curable silicone resin composition is a silicone resin composition curable by ultraviolet (UV) irradiation. A curing reaction of the UV-curable silicone resin composition proceeds, for example, through radical polymerization, radical addition, ionic polymerization, or the like. The UV-curable silicone resin composition whose curing reaction proceeds through radical polymerization includes, for example, a polyorganosiloxane P5 including a double bond (specifically a carbon-carbon double bond) in an alkenyl group, an acryloyl group, or the like. The UV-curable silicone resin composition whose curing reaction proceeds through radical addition includes, for example, the polyorganosiloxane P5 including a double bond (specifically a carbon-carbon double bond) in an alkenyl group, an acryloyl group, or the like and a compound P6 having a functional group, such as a thiol group, capable of radical addition. The UV-curable silicone resin composition whose curing reaction proceeds through ionic polymerization includes, for example, a polyorganosiloxane P7 having a functional group, such as an epoxy group, capable of ionic polymerization and a compound from which a catalytically active species that catalyzes ionic polymerization is produced by UV irradiation.

By UV irradiation of the UV-curable silicone resin composition whose curing reaction proceeds through radical polymerization, for example, a radical polymerization reaction proceeds between the double bonds each included in the alkenyl group, the acryloyl group, or the like in the polyorganosiloxane P5, and thereby the silicone resin can be formed.

The alkenyl group of the polyorganosiloxane P5 is, for example, a vinyl group or a hexenyl group. The number of alkenyl groups in the polyorganosiloxane P5 is, for example, two or more. The alkenyl group is located, for example, at a terminal of the polyorganosiloxane P5. An alkyl group, such as a methyl group or an ethyl group, a phenyl group, or the like may be introduced as a substituent of a side chain to the polyorganosiloxane P5.

The polyorganosiloxane P5 is, for example, one formed by introducing a substituent, such as an alkenyl group or an acryloyl group, including a double bond to any of the polyorganosiloxanes described for the polyorganosiloxane P1.

A weight-average molecular weight of the polyorganosiloxane P5 is, for example, 1,000 or more, and may be 10,000 or more, 100,000 or more, 200,000 or more, 300,000 or more, or even 400,000 or more. The upper limit of the weight-average molecular weight of the polyorganosiloxane P5 is, for example, but not particularly limited to, 1,000,000.

By UV irradiation of the UV-curable silicone resin composition whose curing reaction proceeds through radical polymerization, for example, radical addition of the functional group capable of radical addition and included in the compound P6 to the double bond included in the alkenyl group, the acryloyl group, or the like in the polyorganosiloxane P5 occurs. Thereby a radical addition reaction proceeds, and the silicone resin can be formed.

Examples of the functional group capable of radical addition and included in the compound P6 include a thiol group and an alkylthiol group. Examples of the alkylthiol group include a mercaptomethyl group and a mercaptoethyl group. The number of functional groups capable of radical addition and included in the compound P6 is, for example, two or more.

The compound P6 may be a polyorganosiloxane including the functional group capable of radical addition. The above functional group is located, for example, at a terminal of the polyorganosiloxane. An alkyl group, such as a methyl group or an ethyl group, a phenyl group, or the like may be introduced as a substituent of a side chain to the polyorganosiloxane.

The compound P6 is, for example, one formed by introducing a functional group, such as a thiol group, capable of radical addition to any of the polyorganosiloxanes described for the polyorganosiloxane P1.

A weight-average molecular weight of the compound P6 is, for example, 1,000 or more, and may be 10,000 or more, 100,000 or more, 200,000 or more, 300,000 or more, or even 400,000 or more. The upper limit of the weight-average molecular weight of the compound P6 is, for example, but not particularly limited to, 1,000,000.

By UV irradiation of the UV-curable silicone resin composition whose curing reaction proceeds through ionic polymerization, for example, a catalytically active species that catalyzes ionic polymerization is produced, and an ionic polymerization reaction proceeds between the functional groups each capable of ionic polymerization and included in the polyorganosiloxane P7. The silicone resin can be formed thereby.

Examples of the functional group capable of ionic polymerization and included in the polyorganosiloxane P7 include an epoxy group. Examples of a substituent including an epoxy group include an epoxy group itself, a glycidyl group, and a glycidyloxypropyl group. The number of functional groups capable of ionic polymerization and included in the polyorganosiloxane P7 is, for example, two or more. The functional group capable of ionic polymerization is located, for example, at a terminal of the polyorganosiloxane P7. An alkyl group, such as a methyl group or an ethyl group, a phenyl group, or the like may be introduced as a substituent of a side chain to the polyorganosiloxane P7.

The polyorganosiloxane P7 is, for example, one formed by introducing a functional group, such as an epoxy group, capable of ionic polymerization to any of the polyorganosiloxanes described for the polyorganosiloxane P1.

A weight-average molecular weight of the polyorganosiloxane P7 is, for example, 1,000 or more, and may be 10,000 or more, 100,000 or more, 200,000 or more, 300,000 or more, or even 400,000 or more. The upper limit of the weight-average molecular weight of the polyorganosiloxane P7 is, for example, but not particularly limited to, 1,000,000.

The UV-curable silicone resin composition may further include an organic solvent in addition to the above components. Examples of the organic solvent include: hydrocarbon solvents, such as cyclohexane, n-hexane, and n-heptane; aromatic solvents, such as toluene and xylene; ester solvents, such as ethyl acetate and methyl acetate; ketone solvents, such as acetone and methyl ethyl ketone; and alcohol solvents, such as methanol, ethanol, and butanol. One of these organic solvents may be used alone, or two or more of these organic solvents may be used in combination. The UV-curable silicone resin composition may be of a solvent-free type which is substantially free of a solvent, such as an organic solvent.

(Porous support)

As described above, the porous support 5 includes, for example, the main portion 6, the fine porous layer 7, and the primer layer 8. The porous support 5 is typically formed by forming the primer layer 8 on an ultrafiltration film. The primer layer 8 functions as an underlayer for better adhesion to the separation functional layer 1. Since arranged on the surface 7a of the fine porous layer 7, for example, the primer layer 8 has a microporous structure.

In Embodiment 2, the surface 7a of the fine porous layer 7 is modified by a surface modification treatment. Examples of the surface modification treatment include those described above in Embodiment 1.

The primer layer 8 is a layer, for example, formed from a composition L including a compound C1 having: a reactive group F1 capable of reacting with the polyorganosiloxane(s) (particularly, the above-described polyorganosiloxane P4) included in the silicone resin composition for forming the separation functional layer 1; and the reactive group F2 capable of reacting with the surface 7a of the fine porous layer 7.

In the above compound C1, the reactive group F1 is desirably capable of reacting with the hydrosilyl group in the polyorganosiloxane P4, and is typically an alkenyl group. Specific examples of the alkenyl group include those described above for the polyorganosiloxane P3. The reactive group F2 is desirably capable of reacting with the hydroxy group introduced to the surface 7a of the fine porous layer 7 by the surface modification treatment, and is typically an alkoxy group. Specific examples of the alkoxy group include those described above for the silane compound P2. Specifically, the reactive group F2 is preferably an alkoxysilyl group.

The compound C1 is, for example, a silane coupling agent including the reactive group F1. Specific examples of the compound C1 include vinyltrimethoxysilane.

In addition to the compound C1, the composition L may further include a catalyst for promoting a reaction between the reactive group F1 and the polyorganosiloxane(s), a catalyst for promoting a reaction between the reactive group F2 and the surface 7a of the fine porous layer 7, an organic solvent, and the like.

As described later, the primer layer 8 is produced, for example, by applying the composition L (coating liquid) including the compound C1 to the surface 7a of the fine porous layer 7. An application thickness is, for example, but not particularly limited to, 1 $\mu$m to 100 $\mu$m. By drying a coating film obtained by applying the coating liquid, the primer layer 8 having a thickness equal to or less than approximately one tenth of the application thickness can be obtained.

(Pervaporation membrane manufacturing method)

The pervaporation membrane 10B can be produced, for example, by the following method. First, a laminate including the main portion 6 and the fine porous layer 7 is prepared. Next, the surface modification treatment is performed for the surface 7a of the fine porous layer 7 by the method described with reference to FIG. 1B of Embodiment 1. Subsequently, the composition L (coating liquid) including the compound C1 is prepared, and is applied to the surface 7a of the fine porous layer 7. The resulting coating film is dried to form the primer layer 8, and thus the porous support 5 is obtained (FIG. 2B). Conditions for drying the coating film are not limited to particular conditions; for example, a drying temperature is in the range of room temperature (25°C) to 100°C and a drying time is in the range of 10 minutes to 1 day.

Next, a coating liquid containing a material of the separation functional layer 1 is prepared. The coating liquid is, for example, the silicone resin composition (particularly, the addition type silicone resin composition). Next, as shown in FIG. 2C, the coating liquid is applied to the surface 8b of the primer layer 8 to form the coating film 11. The coating film 11 is cured to form the separation functional layer 1, and thus the pervaporation membrane 10B is obtained (FIG. 2A). The curing of the coating film 11 can be performed at ordinary temperature or in a heated environment. The curing of the coating film 11 can also be performed by irradiation with an active energy ray, such as UV. In the case of curing the coating film 11 by heating, conditions for heating the coating film 11 are not limited to particular conditions, and the conditions described above in Embodiment 1 can be adopted.

The pervaporation membrane 10B may be produced by roll-to-roll processing. That is, the surface modification treatment, the formation of the primer layer 8, and the formation of the separation functional layer 1 may be performed while a laminate including the main portion 6 and the fine porous layer 7 and having a long length is being drawn from a wound body of the laminate and conveyed. Furthermore, a wound body of the pervaporation membrane 10B may be produced by winding the resulting pervaporation membrane 10B. Roll-to-roll processing is suitable for mass production of the pervaporation membrane 10B.

In Embodiment 2, in the formation of the primer layer 8, the reactive group F2 in the compound C1 reacts with the surface 7a of the fine porous layer 7 (specifically, the hydroxy group introduced to the surface 7a). Consequently, the compound C1 can be bonded to the fine porous layer 7. In this state, the reactive group F1 is at the surface of the primer layer 8. Because of this, when the coating film 11 is subjected to a heating treatment, a portion of one polyorganosiloxane (e.g., the polyorganosiloxane P4) included in the silicone resin composition reacts not only with the other polyorganosiloxane (e.g., the polyorganosiloxane P3) but also with the reactive group F1 in the primer layer 8. Consequently, the primer layer 8 can be bonded to the silicone resin formed from the silicone resin composition via a covalent bond. Since the porous support 5 (the primer layer 8) is bonded to the silicone resin, the pervaporation membrane 10B of Embodiment 2 is likely to have a large peeling strength A1.

[Embodiment 3]

As shown in FIG. 3, a pervaporation membrane 10C of Embodiment 3 includes the separation functional layer 1 and the porous support 5. In Embodiment 3, the separation functional layer 1 is formed from a mixture including the silicone resin composition and the compound C1 described above in Embodiment 2. Except the above, the configuration of the pervaporation membrane 10C of Embodiment 3 is the same as that of the pervaporation membrane 10A of Embodiment 1.

In Embodiment 3, the silicone resin composition is, for example, the addition type silicone resin composition. The silicone resin composition may be the condensation type silicone resin composition or the UV-curable silicone resin composition, in some cases. Note that the mixture including the silicone resin composition and the compound C1 is herein sometimes simply referred to as "silicone resin composition". That is, in Embodiment 3, the silicone resin composition for forming the silicone resin includes the polyorganosiloxane(s) (particularly, the polyorganosiloxane P4) and the compound C1. As described above, the compound C1 includes the reactive groups F1 and F2. The reactive group F1 is capable of reacting with the polyorganosiloxane(s) (particularly the polyorganosiloxane P4), and the reactive group F2 is capable of reacting with a surface (specifically, the surface 7a of the fine porous layer 7) of the porous support 5, the surface facing the separation functional layer 1.

(Pervaporation membrane manufacturing method)

The pervaporation membrane 10C can be produced, for example, by the following method. First, the surface modification treatment is performed for the surface 7a of the fine porous layer 7 of the porous support 5 by the method described with reference to FIG. 1B of Embodiment 1.

Next, a coating liquid containing materials of the separation functional layer 1 is prepared. The coating liquid is a mixture including the silicone resin composition (particularly, the addition type silicone resin composition) and the compound C1. This mixture may further include a catalyst for promoting a reaction between the reactive group F1 of the compound C1 and the polyorganosiloxane(s), a catalyst for promoting a reaction between the reactive group F2 and the surface 7a of the fine porous layer 7, or the like. A content of the compound C1 in the mixture is preferably less than 10 wt%, and may be 8 wt% or less, 5 wt% or less, or even 1 wt% or less. When the content of the compound C1 is less than 10 wt%, it is easy to adjust the peeling strength A1 to be a sufficiently large value. The lower limit of the content of the compound C1 is, for example, 0.001 wt%, and may be 0.01 wt% or 0.1 wt%.

Next, the coating liquid is applied to the surface 7a of the fine porous layer 7 to form a coating film. The coating film is cured to form the separation functional layer 1, and thus the pervaporation membrane 10C is obtained. The curing of the coating film can be performed at ordinary temperature or in a heated environment. The curing of the coating film can also be performed by irradiation with an active energy ray, such as UV. In the case of curing the coating film by heating, conditions for heating the coating film are not limited to particular conditions, and the conditions described above in Embodiment 1 can be adopted.

The pervaporation membrane 10C may be produced by roll-to-roll processing. That is, the surface modification treatment and the formation of the separation functional layer 1 may be performed while the porous support 5 having a long length is being drawn from a wound body of the porous support 5 and conveyed. Furthermore, the resulting pervaporation membrane 10C may be wound to produce a wound body of the pervaporation membrane 10C. Roll-to-roll processing is suitable for mass production of the pervaporation membrane 10C.

In Embodiment 3, in the formation of the separation functional layer 1, the reactive group F2 in the compound C1 reacts with the surface 7a of the fine porous layer 7 (specifically, the hydroxy group introduced to the surface 7a).

Consequently, the compound C1 can be bonded to the fine porous layer 7. Moreover, a portion of one polyorganosiloxane (e.g., the polyorganosiloxane P4) included in the silicone resin composition reacts not only with the other polyorganosiloxane (e.g., the polyorganosiloxane P3) but also with the reactive group F1 in the compound C1. Consequently, the fine porous layer 7 can be bonded to the silicone resin formed from the silicone resin composition via the compound C1. Since the porous support 5 (the fine porous layer 7) is bonded to the silicone resin, the pervaporation membrane 10C of Embodiment 3 is likely to have a large peeling strength A1.

[Embodiment 4]

As shown in FIG. 4A, a pervaporation membrane 10D of Embodiment 4 includes the separation functional layer 1 and the porous support 5. The porous support 5 includes only the main portion 6 and is free of the fine porous layer 7. Except the above, the configuration of the pervaporation membrane 10D of Embodiment 4 is the same as that of the pervaporation membrane 10A of Embodiment 1.

(Separation functional layer)

In Embodiment 4, the silicone resin is, for example, formed from the addition type silicone resin composition described in Embodiment 2. In some cases, the silicone resin may be formed from the condensation type silicone resin composition described above in Embodiment 1 or the UV-curable silicone resin composition.

(Porous support)

As described above, the porous support 5 includes only the main portion 6. The main portion 6 is, for example, a fibrous structure, and is typically a non-woven fabric. That is, in Embodiment 4, the separation functional layer 1 is in direct contact with a fibrous structure (specifically a non-woven fabric).

The porous support 5 (the main portion 6) has a surface 5a facing the separation functional layer 1. Specifically, the surface 5a faces the separation functional layer 1 side. The surface 5a is, for example, in direct contact with the separation functional layer 1. The surface 5a includes a plurality of opening portions H1. The opening portion H1 is connected to, for example, a pore included in the porous support 5. In the case where the porous support 5 is a fibrous structure, the opening portion H1 is typically a gap between fibers on the surface 5a.

An average diameter L1 of the plurality of opening portions H1 is 0.5 μm or more, and may be preferably 1 μm or more, 2 μm or more, 5 μm or more, 8 μm or more, 10 μm or more, 13 μm or more, or even 15 μm or more. The upper limit of the average diameter L1 is, for example, but not particularly limited to, 10 mm or less, and may be 1 mm or less, 100 μm or less, or even 50 μm or less.

The average diameter L1 can be determined by the following method. First, the surface 5a of the porous support 5 is observed using a scanning electron microscope (SEM). The observation of the surface 5a is conducted, for example, for the porous support 5 taken out of the pervaporation membrane 10D. The observation of the surface 5a may be conducted for the porous support 5 yet to be used for production of the pervaporation membrane 10D.

In one example, in the case where the porous support 5 is a non-woven fabric and the opening portions H1 are large, the opening portions H1 are determined within an area larger than 2.0 mm in length and 2.5 mm in width of a SEM image obtained using a SEM adjusted at approximately 50-fold magnification. In the case where the porous support 5 includes the fine porous layer 7 and the opening portions H1 are small, the opening portions H1 are determined within an area larger than 4.8 μm in length and 6.0 μm in width of a SEM image obtained using a SEM adjusted at approximately 20,000-fold magnification. Specifically, the opening portions H1 are determined by converting the SEM image into a binary image of the opening portions H1 and the other portion (non-opening portion) than the opening portions H1 using software (e.g., Image J). The area (opening area h) of each of the determined opening portions H1 is calculated by image processing. A diameter of a circle having the same area as the calculated area of the opening portion H1 is considered a diameter d of the opening portion H1. The average diameter L1 can be determined from the obtained results by the following equation. As seen in the following equation, the average diameter L1 is a weighted average of diameter d with weights given by opening area h.

$$\text{Average diameter L1 } (\mu m) = \Sigma\{\text{Opening area h } (\mu m^2) \times \text{Diameter d } (\mu m)\} / \Sigma\text{Opening area h } (\mu m^2)$$

An opening rate R1 of the surface 5a is, for example, but not particularly limited to, 1 to 30%. The opening rate R1 can be measured by the following method. First, the surface 5a of the porous support 5 is observed with a SEM by the method described above for the average diameter L1 so as to determine the opening portion H1. The percentage of the total area of the opening portions H1 in the SEM image can be considered the opening rate R1.

The porous support 5 has a surface (typically, the principal surface 10b of the pervaporation membrane 10D on the porous support side) facing the surface 5a. As does the surface 5a, the surface facing the surface 5a includes, for example, a plurality of opening portions H2. The opening portion H2 is connected, for example, to a pore included in the porous support 5. In the case where the porous support 5 is a fibrous structure, the opening portion H2 is typically a gap between fibers on the surface facing the surface 5a.

An average diameter L2 of the plurality of opening portions H2 is 0.5 μm or more, and may be preferably 1 μm or more, 2 μm or more, 5 μm or more, 8 μm or more, 10 μm or more, 13 μm or more, or even 15 μm or more. The upper limit of the average diameter L2 is, for example, but not particularly limited to, 10 mm or less, and may be 1 mm or less, 100 μm or less, or even 50 μm or less. The average diameter L2 can be measured by the method described above for the average diameter L1.

The average diameter L2 may be comparable to the average diameter L1, or may be greater than the average diameter L1. In one example, a ratio L2/L1 of the average diameter L2 (μm) to the average diameter L1 (μm) is, for example, 0.3 to 30. The ratio L2/L1 is, for example, 30 or less, and may be 25 or less, 20 or less, 15 or less, 10 or less, 5 or less, or even 3 or less. The ratio L2/L1 is, for example, 0.3 or more, and may be 0.5 or more, or even 0.8 or more.

An opening rate R2 of the surface facing the surface 5a is, for example, but not particularly limited to, 1 to 30%. The opening rate R2 can be measured by the method described above for the opening rate R1. The opening rate R2 may be comparable to the opening rate R1, or may be greater than the opening rate R1. In one example, the absolute value |R2 - R1| of the difference between the opening rate R2 (%) and the opening rate R1 (%) is, for example, 30% or less, and may be 20% or less, 10% or less, or even 5% or less.

In Embodiment 4, the porous support 5 tends to have a high air permeability by itself because of the absence of a fine porous layer. In one example, a gas permeability of the porous support 5 in a thickness direction is, for example, 50 seconds/100 mL or less as expressed by an air permeation rate (Gurley permeability) determined according to Method B (Gurley method) of gas permeability measurement specified in JIS L 1096: 2010, and may be 30 seconds/100 mL or less, 10 seconds/100 mL or less, or even 5 seconds/100 mL or less. The lower limit of the Gurley permeability of the porous support 5 is not limited to a particular value, and is, for example, 0.1 seconds/100 mL.

In Embodiment 4, the surface 5a of the porous support 5 is treated with a molecular bonding agent. The molecular bonding agent includes a molecular bonding compound (hereinafter referred to as "compound C2") and, if necessary, a solvent such as an organic solvent or water. The compound C2 includes a reactive group F3 capable of reacting with the surface 5a of the porous support 5 and a reactive group F4 capable of reacting with the silicone resin included in the separation functional layer 1. The reactive group F4 may be capable of reacting not only with the silicone resin but also with the surface 5a of the porous support 5.

The reactive group F3 is, for example, at least one selected from the group consisting of an amino group, an azide group, a mercapto group, an isocyanate group, an ureido group, and an epoxy group, and is typically an azide group. The reactive group F4 is, for example, at least one selected from the group consisting of a silanol group and a group G from which a silanol group is generated through a hydrolysis reaction. A specific example of the group G is an alkoxysilyl group.

The compound C2 is represented, for example, by the following formula (1).

$$R^A\text{-}Z\text{-}R^B \qquad (1)$$

In the formula (1), $R^A$ represents the reactive group F3 or a monovalent substituent having one or more reactive groups F3, $R^B$ represents the reactive group F4, and Z represents a divalent organic group.

In the formula (1), examples of Z include an optionally substituted alkylene group having 1 to 20 carbon atoms, an optionally substituted alkenylene group having 2 to 20 carbon atoms, an optionally substituted alkynylene group having 2 to 20 carbon atoms, and an optionally substituted arylene group having 6 to 20 carbon atoms.

Examples of the alkylene group having 1 to 20 carbon atoms include a methylene group, an ethylene group, a propylene group, a trimethylene group, a tetramethylene group, a pentamethylene group, and a hexamethylene group. The alkylene group having 1 to 20 carbon atoms is preferably a methylene group, an ethylene group, or a propylene group, and is more preferably a propylene group. Examples of the alkenylene group having 2 to 20 carbon atoms include a vinylene group, a propenylene group, a butenylene group, and a pentenylene group. Examples of the alkynylene group having 2 to 20 carbon atoms include an ethynylene group and a propynylene group. Examples of the arylene group having 6 to 20 carbon atoms include an o-phenylene group, an m-phenylene group, a p-phenylene group, a 2,6-naphthylene group, and a 1,5-naphthylene group.

Examples of the substituent that the above alkylene group, alkenylene group, and alkynylene group may have include: halogen atoms, such as a fluorine atom and a chlorine atom; alkoxy groups, such as a methoxy group and an ethoxy group; alkylthio groups, such as a methylthio group and an ethylthio group; and alkoxycarbonyl groups, such as a methoxycarbonyl group and an ethoxycarbonyl group.

Examples of the substituent that the above arylene group may have include: a cyano group; a nitro group; halogen atoms, such as a fluorine atom, a chlorine atom, and a bromine atom; alkyl groups, such as a methyl group and an

ethyl group; alkoxy groups, such as a methoxy group and an ethoxy group; and alkylthio groups, such as a methylthio group and an ethylthio group.

The above substituent may be bonded to any position in a group such as the alkylene group, the alkenylene group, the alkynylene group, or the arylene group. A plurality of the above substituents may be bonded to one element or two or more elements in a group such as the alkylene group, the alkenylene group, the alkynylene group, or the arylene group.

Examples of $R^A$ include groups represented by the following formulae (2) to (4).

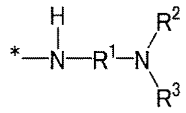

(2)

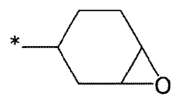

(3)

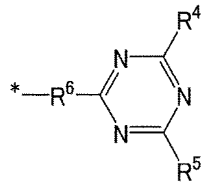

(4)

In the formulae (2) to (4), * represents a bond with Z in the formula (1). The symbol $R^1$ represents a divalent hydrocarbon group having 1 to 10 carbon atoms. The symbols $R^2$ and $R^3$ each independently represent a hydrogen atom or a hydrocarbon group having 1 to 20 carbon atoms. The symbols $R^4$ and $R^5$ each independently represent the reactive group F3 or a group represented by the above formula (2). In the case where $R^4$ and $R^5$ are each a group represented by the formula (2), * in the formula (2) represents a bond with a carbon atom in a triazine ring in the formula (4). The symbol $R^6$ represents a single bond or a divalent group represented by $-N(R^7)-$. The symbol $R^7$ represents a hydrogen atom or a hydrocarbon group having 1 to 20 carbon atoms.

In the formula (2), $R^1$ is preferably a divalent hydrocarbon group having 2 to 6 carbon atoms. Examples of $R^1$ include an alkylene group having 1 to 10 carbon atoms and an arylene group. Specific example of $R^1$ include: alkylene groups, such as an ethylene group or a trimethylene group; and arylene groups, such as an o-phenylene group, an m-phenylene group, and a p-phenylene group.

In the formula (2), $R^2$ and $R^3$ are preferably each independently a hydrogen atom or a hydrocarbon group having 1 to 10 carbon atoms. Examples of $R^2$ and $R^3$ include an alkyl group, an alkynyl group, and an aryl group each having 1 to 20 carbon atoms. Specific examples of $R^2$ and $R^3$ include: alkyl groups, such as a methyl group, an ethyl group, an n-propyl group, an isopropyl group, an n-butyl group, a sec-butyl group, an isobutyl group, a t-butyl group, an n-pentyl group, an n-hexyl group, an n-heptyl group, an n-octyl group, an n-nonyl group, and an n-decyl group; alkenyl groups, such as a vinyl group, a 1-propenyl group, a 2-propenyl group, an isopropenyl group, a 3-butenyl group, a 4-pentenyl group, and a 5-hexenyl group; alkynyl groups, such as an ethynyl group, a propargyl group, and a butynyl group; and aryl groups, such as a phenyl group, a 1-naphthyl group, and a 2-naphthyl group.

In the formula (4), $R^4$ and $R^5$ preferably represent the same reactive group F3.

In the formula (4), $R^6$ represents a single bond or a divalent group represented by $-N(R^7)-$. Examples of the hydrocarbon group represented by $R^7$ include those described above as the hydrocarbon groups represented by $R^2$ and $R^3$. The symbol $R^6$ preferably represents -NH-.

Of the groups represented by the above formulae (2) to (4), $R^A$ is preferably a group represented by the formula (4), more preferably a group represented by the formula (4), where $R^4$ or $R^5$ is an azide group or a group represented by the above formula (2).

The symbol $R^A$ is, for example, a group represented by the following formula (5).

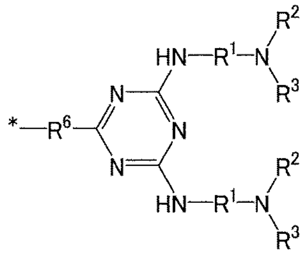

(5)

In the formula (5), * represents the bond to Z in the formula (1). The symbols $R^1$ to $R^3$ and $R^6$ are each as described above for the formulae (2) and (4). The symbols $R^1$ to $R^3$ may be the same or may be different from each other.

In the formula (1), $R^B$ may be a group represented by the following formula (6).

$$-Si(X)_a(Y)_{3-a} \qquad (6)$$

In the formula (6), X represents a hydroxy group or an alkoxy group having 1 to 10 carbon atoms, and Y represents a hydrocarbon group having 1 to 20 carbon atoms. The symbol a represents an integer of 1 to 3.

In the formula (6), X is, for example, a methoxy group, an ethoxy group, an n-propoxy group, or an isopropoxy group, and is preferably an ethoxy group. Examples of Y include those described above as the hydrocarbon groups represented by $R^2$ and $R^3$ in the formula (2).

Preferably, in $R^B$, X represents a hydroxy group or an alkoxy group having 1 to 10 carbon atoms and a is 3. More preferably, in $R^B$, X represents a hydroxy group or an ethoxy group and a is 3.

Examples of the compound C2 where $R^A$ is an amino group include 3-aminopropyltrimethoxysilane, 3-aminopropyltriethoxysilane, 3-aminopropyldimethoxymethylsilane, 3-aminopropyldiethoxymethylsilane, [3-(N,N-dimethylamino)propyl]trimethoxysilane, [3-(phenylamino)propyl]trimethoxysilane, trimethyl[3-(triethoxysilyl)propyl]ammonium chloride, and trimethyl[3-(trimethoxysilyl)propyl]ammonium chloride.

Examples of the compound C2 where $R^A$ is an azide group include (11-azideundecyl)trimethoxysilane and (11-azideundecyl)triethoxysilane.

Examples of the compound C2 where $R^A$ is a mercapto group include 3-mercaptopropyltrimethoxysilane, 3-mercaptopropyltriethoxysilane, and 3-mercaptopropyldimethoxymethylsilane.

Examples of the compound C2 where $R^A$ is an isocyanate group include 3-(trimethoxysilyl)propylisocyanate and 3-(triethoxysilyl)propylisocyanate.

Examples of the compound C2 where $R^A$ is a ureido group include 3-ureidopropyltrimethoxysilane and 3-ureidopropyltriethoxysilane.

Examples of the compound C2 where $R^A$ is an epoxy group include 3-glycidoxypropyltrimethoxysilane, 3-glycidoxypropyltriethoxysilane, 3-glycidoxypropylmethyldimethoxysilane, and 3-glycidoxypropylmethyldiethoxysilane.

Examples of the compound C2 where $R^A$ is a monovalent substituent having one or more reactive groups F3 include 3-(2-aminoethylamino)propyltrimethoxysilane, 3-(2-aminoethylamino)propyltriethoxysilane, 3-(2-aminoethylamino)propyldimethoxymethylsilane, 2-(3,4-epoxycyclohexyl)ethyltrimethoxysilane, and compounds represented by the following formulae (1-1) to (1-9).

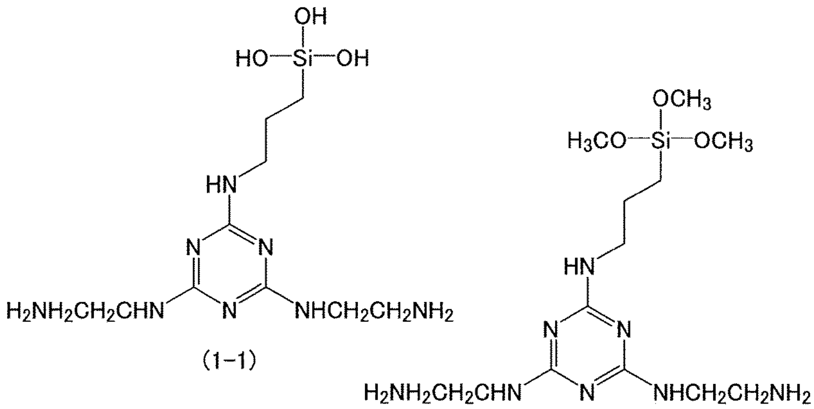

(1-1)

(1-2)

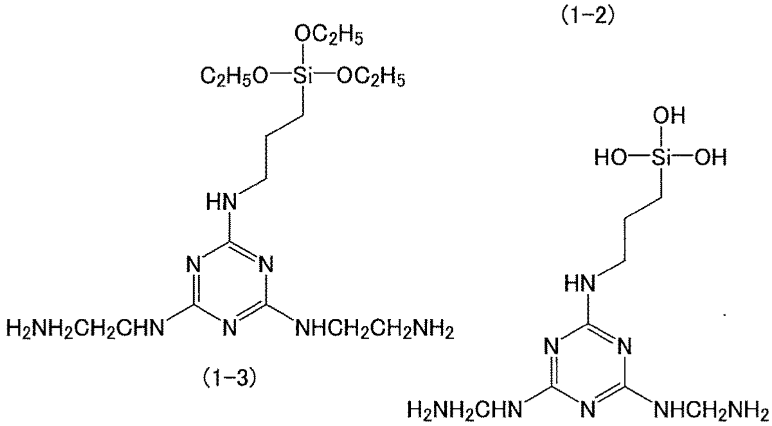

(1-3)

(1-4)

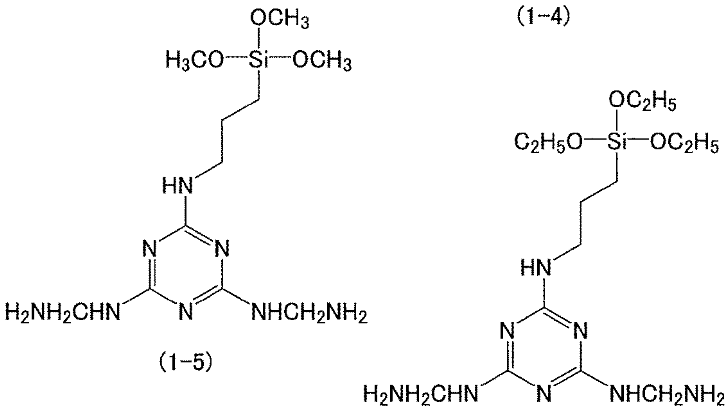

(1-5)

(1-6)

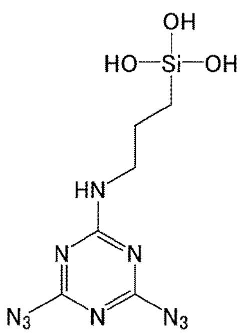

(1-7)

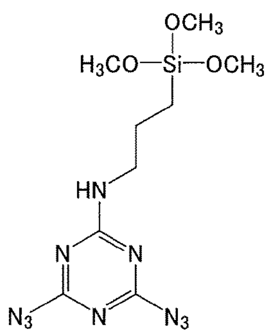

(1-8)

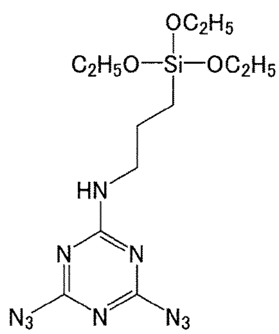

(1-9)

(1-1): N,N'-bis(2-aminoethyl)-6-(3-trihydroxysilylpropyl)amino-1,3,5-triazine-2,4-diamine

(1-2): N,N'-bis(2-aminoethyl)-6-(3-trimethoxysilylpropyl)amino-1,3,5-triazine-2,4-diamine
(1-3): N,N'-bis(2-aminoethyl)-6-(3-triethoxysilylpropyl)amino-1,3,5-triazine-2,4-diamine
(1-4): N,N'-bis(2-aminomethyl)-6-(3-trihydroxysilylpropyl)amino-1,3,5-triazine-2,4-diamine
(1-5): N,N'-bis(2-aminomethyl)-6-(3-trimethoxysilylpropyl)amino-1,3,5-triazine-2,4-diamine
(1-6): N,N'-bis(2-aminomethyl)-6-(3-triethoxysilylpropyl)amino-1,3,5-triazine-2,4-diamine
(1-7): 6-(3-trihydroxysilylpropyl)amino-1,3,5-triazine-2,4-diazide
(1-8): 6-(3-trimethoxysilylpropyl)amino-1,3,5-triazine-2,4-diazide
(1-9): 6-(3-triethoxysilylpropyl)amino-1,3,5-triazine-2,4-diazide

The compound C2 is preferably one of the compounds represented by the above formulae (1-1) to (1-9), and more preferably the compound represented by the formula (1-1) or the compound represented by the formula (1-9).

(Pervaporation membrane manufacturing method)

The pervaporation membrane 10D can be produced, for example, by the following method. First, as shown in FIG. 4B, the separation functional layer 1 is produced on a release liner 12. The separation functional layer 1 can be produced by applying the coating liquid containing a material of the separation functional layer 1 to the release liner 12 and curing the resulting coating film. The coating liquid is, for example, the silicone resin composition (particularly, the addition type silicone resin composition). The curing of the coating film can be performed at ordinary temperature or in a heated environment. The curing of the coating film can also be performed by irradiation with an active energy ray, such as UV. In the case of curing the coating film by heating, conditions for heating the coating film are not limited to particular conditions, and the conditions described above in Embodiment 1 can be adopted. The surface modification treatment may be performed for the surface 1a of the separation functional layer 1 by the method described with reference to FIG. 1B of Embodiment 1.

Examples of the release liner 12 include: a film including a resin; paper; and a sheet including a metal material, such as aluminum or stainless steel. Sheets including a metal material tend to have high thermal resistance. The release liner 12 is preferably a film including a resin for high surface smoothness. Examples of a polymer included in the resin of the release liner 12 include: polyolefins, such as polyethylene, polypropylene, polybutene, polybutadiene, and polymethylpentene; polyesters, such as polyethylene terephthalate, polybutylene terephthalate, and polyethylene naphthalate; polyvinyl chloride and a vinyl chloride copolymer; polyurethane; and an ethylene-vinyl acetate copolymer. The polymer included in the resin of the release liner 12 is preferably a polyester, particularly polyethylene terephthalate.

A surface of the release liner 12 may be treated with a release treatment. The release treatment can be performed, for example, by providing a release treatment agent to the surface of the release liner 12. Examples of the release treatment agent include a silicone release treatment agent, a long-chain alkyl release treatment agent, a fluorine release treatment agent, and a molybdenum sulfide release treatment agent. One of the release treatment agents may be used alone, or two or more of the release treatment agents may be used in combination. The release liner 12 is preferably a polyethylene terephthalate (PET) film treated by the release treatment.

A thickness of the release liner 12 is, for example, but not particularly limited to, 5 to 100 $\mu$m, and is preferably 10 to 50 $\mu$m.

Next, the above molecular bonding agent (coating liquid) including the compound C2 is prepared. The molecular bonding agent is applied to the surface 5a of the porous support 5. Consequently, the reactive groups F3 and F4 in the compound C2 react with the surface 5a of the porous support 5 (specifically, the hydroxy group at the surface 5a). As a result of the reaction of the compound C2 with the surface 5a, the compound C2 is bonded to the surface 5a. In this state, the reactive group F4 is at the surface 5a. That is, the reactive group F4 can be introduced to the surface 5a of the porous support 5 by the treatment with the molecular bonding agent.

Next, the porous support 5 is placed on the separation functional layer 1 (FIG. 4C) such that the surface 5a of the porous support 5 with the molecular bonding agent thereon is in contact with the separation functional layer 1. This is followed by heat drying. Consequently, a reaction between the reactive group F4 at the surface 5a and the resin (particularly, the silicone resin) included in the separation functional layer 1 proceeds.

The temperature at which the molecular bonding agent is dried is, for example, 40 to 150°C, and may be 60°C or higher, or even 70°C or higher. The temperature at which the molecular bonding agent is dried may be 150°C or lower, or 90°C or lower.

The heat drying of the molecular bonding agent may be performed just after the application of the molecular bonding agent to the surface 5a of the porous support 5. In that case, the step of applying and drying the molecular bonding agent may be repeated multiple times. The density of the reactive group F4 on the surface 5a can be increased thereby. In the case where the above step is repeated multiple times, different types of molecular bonding agents may be used in different steps.

In another example where the reactive group F3 is an azide group, a reaction between the reactive group F3 and

the surface 5a of the porous support 5 tends to proceed easily by UV irradiation of the surface 5a.

The pervaporation membrane 10D is obtained by reacting the reactive group F4 with the silicone resin and then removing the release liner 12.

The pervaporation membrane 10D may be produced by roll-to-roll processing. That is, the formation of the separation functional layer 1, the placement of the porous support 5, and the removal of the release liner 12 may be performed while the release liner 12 having a long length is being drawn from a wound body of the release liner 12 and conveyed. Furthermore, the resulting pervaporation membrane 10D may be wound to produce a wound body of the pervaporation membrane 10D. Roll-to-roll processing is suitable for mass production of the pervaporation membrane 10D.

In Embodiment 4, the surface 5a of the porous support 5 can be bonded to the silicone resin included in the separation functional layer 1 via the compound C2. Since the surface 5a of the porous support 5 is bonded to the silicone resin, the pervaporation membrane 10D of Embodiment 4 is likely to have a large peeling strength A1.

[Embodiment 5]

As shown in FIG. 5, a pervaporation membrane 10E of Embodiment 5 includes the separation functional layer 1 and the porous support 5. In the pervaporation membrane 10E, the separation functional layer 1 includes a matrix 2 including a silicone resin and a filler 3 dispersed in the matrix 2. Except the above, the configuration of the pervaporation membrane 10E of Embodiment 5 is the same as that of the pervaporation membrane 10A of Embodiment 1.

(Separation functional layer)

As described above, in the pervaporation membrane 10E, the separation functional layer 1 further includes the filler 3. All or a portion of particles of the filler 3 is embedded in the matrix 2. In the matrix 2, all particles of the filler 3 may be spaced from each other, or a portion of the particles of the filler 3 may aggregate.

In Embodiment 5, the silicone resin included in the matrix 2 is formed, for example, from the addition type silicone resin composition described above in Embodiment 2. In some cases, the silicone resin may be formed from the condensation type silicone resin composition described above in Embodiment 1 or the UV-curable silicone resin composition.

The filler 3 includes, for example, an inorganic material, such as zeolite, silica, or bentonite. The filler 3 includes, for example, at least one selected from the group consisting of zeolite and silica, and preferably includes silica. The filler 3 including silica tends to have higher resistance to hydrolysis than that of the filler 3 including zeolite. Moreover, in the case of the filler 3 including silica, the silicone resin included in the matrix 2 tends to have a higher free volume. The high free volume of the silicone resin tends to enhance the separation properties of the pervaporation membrane 10E, particularly, the separation factor $\alpha$ for BuOH with respect to water.

Silica commonly means silicon dioxide. The filler 3 may be a silica filler including silicon dioxide as its main component. The silica filler does not have, for example, a crystal structure. The silica filler can be produced, for example, by causing silicon metal to react with oxygen. The silica filler can also be produced by a sol-gel process, sedimentation, an aqueous solution wet method, or the like. The filler 3 may be substantially composed only of silicon dioxide.

Note that the filler 3 may include zeolite. Examples of the zeolite included in the filler 3 include a high-silica zeolite having a high ratio of silica to alumina and an alumina-free silicalite. As the filler 3 including a high-silica zeolite can be used HSZ (registered trademark) manufactured by Tosoh Corporation, HiSiv (registered trademark) manufactured by UNION SHOWA K.K., USKY manufactured by UNION SHOWA K.K., or Zeoal (registered trademark) manufactured by Nakamura Choukou Co., Ltd.

The filler 3, particularly the silica filler, is free of, for example, a micropore having a diameter of 2 nm or less. However, the filler 3 may have a mesopore having a diameter of 2 nm to 50 nm and a macropore having a diameter of 50 nm or more.

The filler 3, particularly the silica filler, preferably has a surface modified with a modifying group including a hydrocarbon group. In other words, the filler 3 is preferably surface-treated with a modifying group. The surface-modified filler 3 is highly dispersible in the silicone resin and is suitable for inhibiting occurrence of a crack, for example, in production of the separation functional layer 1.

The number of carbon atoms in the hydrocarbon group included in the modifying group is, for example, but not particularly limited to, 1 to 25. The number of carbon atoms in the hydrocarbon group may be 5 or less. The hydrocarbon group may be linear, branched, or cyclic. Examples of the hydrocarbon group include alkyl groups, such as a methyl group and an ethyl group.

The modifying group may further include a silicon atom, and the hydrocarbon group may be bonded to the silicon atom. The modifying group may include at least one selected from the group consisting of an organosilyl group and a polyorganosiloxane group. Examples of the organosilyl group include: triorganosilyl groups, such as a trimethylsilyl group;

and diorganosilyl groups, such as a dimethylsilyl group. Examples of the polyorganosiloxane group include a dimethylpolysiloxane group.

The surface modification with the modifying group can be performed, for example, by a reaction between a hydroxyl group at the surface of the filler 3 and a known silane coupling agent.

Specific examples of the surface-modified silica filler include those manufactured by Nippon Aerosil Co., Ltd. under the product names of "AEROSIL (registered trademark) RX series" (RX 50, RX 200, RX 300, etc.), "AEROSIL (registered trademark) RY series" (RY 50, RY 200, RY 200 S, etc.), "AEROSIL (registered trademark) NY series" (NY 50, NY 50 L, etc.), "AEROSIL (registered trademark) NAX series" (NAX 50, etc.), and "AEROSIL (registered trademark) R series" (R 972, R 974, R 976, etc.).

The filler 3 is preferably sufficiently surface-modified with the modifying group in terms of dispersibility in the silicone resin. In other words, the number of hydroxyl groups on the surface of the filler 3 is preferably small. Whether the filler 3 is sufficiently surface-modified with the modifying group can be judged, for example, from the pH of a dispersion of the filler 3 or a Hansen solubility parameter (HSP value) of the filler 3. Incidentally, the Hansen solubility parameter is a solubility parameter resulting from division of the solubility parameter introduced by Hildebrand into three components, namely, a dispersion term $\delta D$, a polarity term $\delta P$, and a hydrogen bonding term $\delta H$. The details of the Hansen solubility parameter are disclosed in, for example, "Hansen Solubility Parameters; A Users Handbook (CRC Press, 2007)".

In the present embodiment, the pH measured by Test 4 below for a dispersion of the filler 3 is, for example, 4.0 to 9.0, and may be 6.0 to 8.0. The pH of the dispersion is preferably neutral (around pH 7.0). When the pH of the dispersion is neutral, it can be said that the filler 3 is sufficiently surface-modified with the modifying group and the number of hydroxyl groups on the surface is small.

Test 4: Water, methanol, and the filler 3 are mixed to prepare a dispersion, and pH of the dispersion is measured. A content of the filler 3 in the dispersion is 4 wt%, a weight ratio between water and methanol in the dispersion is 1:1, and the dispersion has a temperature of 25°C.

The filler 3 has, for example, a particle shape. The term "particle shape" herein includes a spherical shape, an elliptical shape, a flake shape, and a fiber shape. The filler 3 may be powdery. An average particle diameter of the filler 3 is, for example, but not particularly limited to, 50 μm or less, and may be 20 μm or less, 10 μm or less, 1 μm or less, 500 nm or less, 100 nm or less, 50 nm or less, 30 nm or less, or even 20 nm or less. The separation functional layer 1 including the filler 3 having a small average particle diameter is likely to distribute a stress applied to the separation functional layer 1 and tends to have strong adhesion to the porous support 5. The lower limit of the average particle diameter of the filler 3 of the separation functional layer 1 is, for example, but not particularly limited to, 1 nm, and may be 5 nm.

The average particle diameter of the filler 3 can be determined, for example, by the following method. First, a cross-section of the separation functional layer 1 is observed using a transmission electron microscope. The area of one of the particles of the filler 3 in the resulting electron microscope image is calculated by image processing. The diameter of a circle having the same area as the calculated area is considered the particle diameter (the diameter of the particle) of the particle of the filler 3. The particle diameter was calculated for any number (at least 50) of the particles of the filler 3, and the average of the calculated values was considered the average particle diameter of the filler 3.

The content of the filler 3 in the separation functional layer 1 is, for example, 1 wt% or more, and may be 5 wt% or more, 10 wt% or more, 20 wt% or more, 30 wt% or more, or even 40 wt% or more. The upper limit of the content of the filler 3 in the separation functional layer 1 is, for example, but not particularly limited to, 70 wt% or less, and may be less than 50 wt%. When the content of the filler 3 is less than 50 wt%, it is likely that occurrence of a defect, such as a crack, can be sufficiently inhibited in production of the separation functional layer 1. A content of the matrix 2 in the separation functional layer 1 is, for example, but not particularly limited to, 30 wt% to 99 wt%, and may be 30 wt% to 90 wt%.

A surface area D1 of the filler 3 per weight of the matrix 2 is, for example, but not particularly limited to, 5 $m^2/g$ or more, and may be 10 $m^2/g$ or more, 20 $m^2/g$ or more, 30 $m^2/g$ or more, 40 $m^2/g$ or more, or even 50 $m^2/g$ or more. The upper limit of the surface area D1 is, for example, but not particularly limited to, 100 $m^2/g$ or less. The surface area D1 can be calculated by the following equation using a BET specific surface area D2 ($m^2/g$) determined for the filler 3 by nitrogen gas adsorption, a weight W1 (g) of the matrix 2 included in the separation functional layer 1, and a weight W2 (g) of the filler 3 included in the separation functional layer 1.

$$D1\ (m^2/g) = D2\ (m^2/g) \times W2\ (g)/W1\ (g)$$

(Porous support)

The porous support 5 includes, for example, the main portion 6 and the fine porous layer 7. In Embodiment 5, the surface 7a of the fine porous layer 7 is not necessarily modified with the surface modification treatment.

(Pervaporation membrane manufacturing method)

The pervaporation membrane 10E can be produced, for example, by the following method. First, a coating liquid containing materials of the separation functional layer 1 is prepared. The coating liquid is a mixture containing the silicone resin composition (particularly, the addition type silicone resin composition) and the filler 3. Next, the coating liquid is applied to the surface 7a of the fine porous layer 7 to form a coating film. The coating film is cured to form the separation functional layer 1, and thus the pervaporation membrane 10E is obtained. The curing of the coating film can be performed at ordinary temperature or in a heated environment. The curing of the coating film can also be performed by irradiation with an active energy ray, such as UV. In the case of curing the coating film by heating, conditions for heating the coating film are not limited to particular conditions, and the conditions described above in Embodiment 1 can be adopted.

The pervaporation membrane 10E may be produced by roll-to-roll processing. That is, the formation of the separation functional layer 1 may be performed while the porous support 5 having a long length is being drawn from a wound body of the porous support 5 and conveyed. Furthermore, the resulting pervaporation membrane 10E may be wound to produce a wound body of the pervaporation membrane 10E. Roll-to-roll processing is suitable for mass production of the pervaporation membrane 10E.

In Embodiment 5, the separation functional layer 1 includes the filler 3. The filler 3 can distribute a stress applied to the separation functional layer 1 and can enhance the adhesion to the porous support 5. Therefore, the pervaporation membrane 10E of Embodiment 5 is likely to have a large peeling strength A1.

[Embodiment 6]

As shown in FIG. 6, a pervaporation membrane 10F of Embodiment 6 includes the separation functional layer 1 and the porous support 5. The porous support 5 includes the main portion 6 and the fine porous layer 7 placed on the main portion 6, and the fine porous layer 7 includes polysulfone. Except the above, the configuration of the pervaporation membrane 10F of Embodiment 6 is the same as that of the pervaporation membrane 10A of Embodiment 1.

(Separation functional layer)

In Embodiment 6, the silicone resin is, for example, formed from the addition type silicone resin composition described in Embodiment 2. In some cases, the silicone resin may be formed from the condensation type silicone resin composition described above in Embodiment 1 or the UV-curable silicone resin composition.

In Embodiment 6, the silicone resin composition forming the silicone resin preferably has a low content of a solvent, such as an organic solvent. The silicone resin composition having a low content of a solvent can inhibit, in production of the pervaporation membrane 10F, the fine porous layer 7 including polysulfone from having contact with the silicone resin composition and being dissolved. The solvent content in the silicone resin composition is, for example, 40 wt% or less, and may be 20 wt% or less, or even 10 wt% or less. The silicone resin composition may be of a solvent-free type which is free of a solvent.

(Porous support)

As described above, the porous support 5 includes the main portion 6 and the fine porous layer 7 placed on the main portion 6, and the fine porous layer 7 includes polysulfone. The fine porous layer 7 may include the polysulfone as its main component, or may be substantially composed of the polysulfone. In Embodiment 6, the surface 7a of the fine porous layer 7 is not necessarily modified with the surface modification treatment.

(Pervaporation membrane manufacturing method)

The pervaporation membrane 10F can be produced, for example, by the following method. First, the porous support 5 including the main portion 6 and the fine porous layer 7 including polysulfone is prepared. Next, a coating liquid containing a material of the separation functional layer 1 is prepared. The coating liquid is, for example, the silicone resin composition (particularly, the addition type silicone resin composition). Next, the coating liquid is applied to the surface 7a of the fine porous layer 7 to form a coating film. The coating film is cured to form the separation functional layer 1, and thus the pervaporation membrane 10F is obtained. The curing of the coating film can be performed at ordinary temperature or in a heated environment. The curing of the coating film can also be performed by irradiation with an active energy ray, such as UV. In the case of curing the coating film by heating, conditions for heating the coating film are not limited to particular conditions, and the conditions described above in Embodiment 1 can be adopted.

The pervaporation membrane 10F may be produced by roll-to-roll processing. That is, the formation of the separation functional layer 1 may be performed while the porous support 5 having a long length is being drawn from a

wound body of the porous support 5 and conveyed. Furthermore, the resulting pervaporation membrane 10F may be wound to produce a wound body of the pervaporation membrane 10F. Roll-to-roll processing is suitable for mass production of the pervaporation membrane 10F.

According to studies by the present inventors, polysulfone has a high affinity for the silicone resin. Therefore, in Embodiment 6, the adhesion between the fine porous layer 7 including the polysulfone and the separation functional layer 1 including the silicone resin is strong. Therefore, the pervaporation membrane 10F of Embodiment 6 is likely to have a large peeling strength A1.

<Embodiment of membrane separation device>

As shown in FIG. 7, a membrane separation device 20 of the present embodiment includes the pervaporation membrane 10A and a tank 22. The membrane separation device 20 may include any of the pervaporation membranes 10B to 10F described in FIG. 2A to FIG. 6 instead of the pervaporation membrane 10A. The tank 22 has a first chamber 23 and a second chamber 24. The first chamber 23 functions as a feed space to which a supplied fluid (specifically, the aqueous solution S described above) is supplied. The second chamber 24 functions as a permeation space to which a permeated fluid S1 is supplied. The permeated fluid S1 is obtained by allowing the aqueous solution S to permeate through the pervaporation membrane 10A.

The pervaporation membrane 10A is placed in the tank 22. In the tank 22, the pervaporation membrane 10A separates the first chamber 23 and the second chamber 24 from each other. The pervaporation membrane 10A extends from one of a pair of wall surfaces of the tank 22 to the other.

The first chamber 23 has an inlet 23a and an outlet 23b. The second chamber 24 has an outlet 24a. The inlet 23a is an opening for supplying the aqueous solution S to the feed space (the first chamber 23). The outlet 24a is an opening for discharging the permeated fluid S1 from the permeation space (the second chamber 24). The outlet 23b is an opening for discharging, from the feed space (the first chamber 23), the aqueous solution S (a non-permeated fluid S2) not having permeated through the pervaporation membrane 10A. The inlet 23a, the outlet 23b, and the outlet 24a are arranged, for example, in the wall surfaces of the tank 22.

The membrane separation device 20 is suitable for a flow-type (continuous-type) membrane separation method. However, the membrane separation device 20 may be used for a batch-type membrane separation method.

(Method for operating membrane separation device)

Operation of the membrane separation device 20 is performed, for example, by the following method. First, the aqueous solution S is supplied to the first chamber 23 of the membrane separation device 20 through the inlet 23a. This makes it possible to bring the aqueous solution S into contact with one surface (e.g., the principal surface 10a) of the pervaporation membrane 10A.

Next, in a state where the aqueous solution S is in contact with the one surface of the pervaporation membrane 10A, a space adjacent to the other surface (e.g., the principal surface 10b) of the pervaporation membrane 10A is decompressed. Specifically, the second chamber 24 is decompressed via the outlet 24a. The second chamber 24 can be decompressed, for example, by a decompression device, such as a vacuum pump. A pressure in the second chamber 24 is, for example, 50 kPa or less, and may be 20 kPa or less, 10 kPa or less, 5 kPa or less, 3 kPa or less, or even 2 kPa or less. The term "pressure" herein means absolute pressure unless otherwise noted.

By decompressing the second chamber 24, the permeated fluid S1 having a high content of the organic compound C can be obtained on the other surface side of the pervaporation membrane 10A. In other words, the permeated fluid S1 is supplied to the second chamber 24. In the second chamber 24, the permeated fluid S1 is typically a gas. The permeated fluid S1 is discharged outside the membrane separation device 20 through the outlet 24a.

On the other hand, the content of the organic compound C in the aqueous solution S gradually decreases from the inlet 23a of the first chamber 23 toward the outlet 23b thereof. The aqueous solution S (the non-permeated fluid S2) processed in the first chamber 23 is discharged outside the membrane separation device 20 through the outlet 23b. The non-permeated fluid S2 is typically a liquid.

As described above, the pervaporation membrane 10A is preferentially permeable to the organic compound C contained in the aqueous solution S. Therefore, the content of the organic compound C in the permeated fluid S1 obtained by the operation of the membrane separation device 20 is higher than that in the aqueous solution S to be supplied to the membrane separation device 20.

<Modification of membrane separation device>

The membrane separation device 20 may be a spiral membrane element, a hollow fiber membrane element, a disk tube membrane element in which a plurality of pervaporation membranes are laminated, a plate-and-flame

membrane element, or the like. FIG. 8 shows a spiral membrane element. A membrane separation device 25 of FIG. 8 includes a central tube 26 and a laminate 27. The laminate 27 includes the pervaporation membrane 10A (or any of the pervaporation membranes 10B to 10F).

The central tube 26 has a cylindrical tube shape. The central tube 26 has a surface with a plurality of holes or slits to allow the permeated fluid S1 to flow into the central tube 26. Examples of a material of the central tube 26 include: resins, such as an acrylonitrile-butadiene-styrene copolymer resin (an ABS resin), a polyphenylene ether resin (a PPE resin), or a polysulfone resin (a PSF resin); and metals, such as stainless steel or titanium. The central tube 26 has an inner diameter in a range of, for example, 20 to 100 mm.

The laminate 27 further includes a feed-side flow passage material 28 and a permeation-side flow passage material 29 in addition to the pervaporation membrane 10A. The laminate 27 is wound around the central tube 26. The membrane separation device 25 may be further provided with an exterior material (not shown).

As the feed-side flow passage material 28 and the permeation-side flow passage material 29 can be used, for example, a net, woven fabric, or knitted fabric formed of a resin, such as polyethylene, polypropylene, polyethylene terephthalate (PET), polyphenylene sulfide (PPS), or an ethylene-chlorotrifluoroethylene copolymer (ECTFE).

The membrane separation device 25 can be operated, for example, by the following method. First, the aqueous solution S is supplied to an end of the wound laminate 27. A space inside the central tube 26 is decompressed. The permeated fluid S1 having permeated through the pervaporation membrane 10A of the laminate 27 thereby moves into the central tube 26. The permeated fluid S1 is discharged outside through the central tube 26. The aqueous solution S (the non-permeated fluid S2) processed by the membrane separation device 25 is discharged outside from the other end of the wound laminate 27.

<Embodiment of membrane separation system>

As shown in FIG. 9, a membrane separation system 100 of the present embodiment includes the membrane separation device 20 described above. The membrane separation system 100 may include the membrane separation device 25 described in FIG. 8 instead of the membrane separation device 20.

The membrane separation system 100 further includes a tank 30 in addition to the membrane separation device 20. The tank 30 stores the aqueous solution S to be supplied to the membrane separation device 20. The tank 30 may be a fermenter for generating the organic compound C by fermentation of a carbon source by a microorganism.

The membrane separation system 100 further includes an aqueous solution feed passage 70, a non-permeated fluid discharge passage 71, and a permeated fluid discharge passage 72. The aqueous solution feed passage 70 is a passage for supplying the aqueous solution S from the tank 30 to the membrane separation device 20 during operation, and is connected to an outlet 31 of the tank 30 and the inlet 23a of the membrane separation device 20. The aqueous solution feed passage 70 is provided, for example, with a pump 50 that controls a flow rate of the aqueous solution S.

The non-permeated fluid discharge passage 71 is a passage for discharging the non-permeated fluid S2 from the membrane separation device 20 during operation, and is connected to the outlet 23b of the membrane separation device 20. The non-permeated fluid discharge passage 71 is provided, for example, with a pump 51 that controls a flow rate of the non-permeated fluid S2. Note that the non-permeated fluid discharge passage 71 may not be provided with the pump 51. The non-permeated fluid discharge passage 71 may be connected to an inlet 32 of the tank 30 and configured to supply the non-permeated fluid S2 to the tank 30 during operation. That is, the non-permeated fluid discharge passage 71 may be configured to allow the non-permeated fluid S2 to be mixed with the aqueous solution S in the tank 30 and to circulate through the aqueous solution feed passage 70 and the non-permeated fluid discharge passage 71. In the case where the non-permeated fluid S2 is supplied to the tank 30, the aqueous solution S and the non-permeated fluid S2 are mixed in the tank 30 to decrease the content of the organic compound C in the aqueous solution S. In the case where the tank 30 is a fermenter, a decrease in the content of the organic compound C in the aqueous solution S can inhibit fermentation by a microorganism from stopping, thereby making it possible to produce the fermented product continuously.

The permeated fluid discharge passage 72 is a passage for discharging the permeated fluid S1 from the membrane separation device 20 during operation, and is connected to the outlet 24a of the membrane separation device 20. The permeated fluid discharge passage 72 is provided, for example, with a decompression device 52. The decompression device 52 can decompress the permeation space of the membrane separation device 20. The decompression device 52 is preferably a vacuum device, such as a vacuum pump. The vacuum pump is typically a gas transport vacuum pump, and is, for example, a reciprocating vacuum pump, a rotary vacuum pump, or the like. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps, such as a roots dry pump, a claw dry pump, a screw dry pump, a turbo dry pump, and a scroll dry pump. The pump as the decompression device 52 may include a variable speed mechanism for changing the rotational speed, etc. An example of the variable speed mechanism is an inverter that drives a motor of the pump. By controlling the rotational speed, etc. of the pump by the variable speed mechanism, it is possible to adjust properly the pressure in the

permeation space of the membrane separation device 20.

The permeated fluid discharge passage 72 may be further provided with a heat exchanger for cooling the permeated fluid S1. The heat exchanger can condense the permeated fluid S1 that is gaseous. The heat exchanger is, for example, a gas-liquid heat exchanger that causes heat exchange between a cooling medium, such as an antifreeze, and the permeated fluid S1 that is gaseous. The heat exchanger may be positioned between the membrane separation device 20 and the decompression device 52 (upstream of the decompression device 52), or between the decompression device 52 and a recovery unit 40 (downstream of the decompression device 52) described later.

The membrane separation system 100 further includes a recovery unit 40. The recovery unit 40 recovers the permeated fluid S1 from the membrane separation device 20 and can, for example, store the permeated fluid S1. The recovery unit 40 is, for example, a tank that stores the permeated fluid S1. The permeated fluid discharge passage 72 is connected to an inlet 41 of the recovery unit 40.

The membrane separation system 100 may further include a controller 60 that controls each member of the membrane separation system 100. The controller 60 is, for example, a digital signal processor (DSP) including an A/D conversion circuit, an input/output circuit, an arithmetic circuit, a storage device, etc. A program for operating properly the membrane separation system 100 is stored in the controller 60.

Each passage of the membrane separation system 100 is formed of, for example, a metal or resin pipe unless otherwise noted.

EXAMPLES

Hereinafter, the present invention will be described in more detail by way of examples and a comparative example, but the present invention is not limited to these examples.

(Example 1)

First, RS-50 (a laminate composed of a fine porous PVDF layer and a non-woven PET fabric) manufactured by Nitto Denko Corporation was prepared as a porous support. The surface of the fine porous layer of the porous support was subjected to a corona treatment. The corona treatment was performed at an output of 0.16 kW, a table travel speed of 3 m/min, and an amount of discharge of 200 W·min/$m^2$.

Next, 62 g of toluene (manufactured by FUJIFILM Wako Pure Chemical Corporation; special grade) as a dilute solvent and 3 g of a tin-based catalyst (YC6831 manufactured by Momentive Performance Materials Japan LLC) as a curing catalyst were added to 100 g of a silicone resin composition (YSR3022 manufactured by Momentive Performance Materials Japan LLC; toluene-MEK solution; solids: 30 wt%) to produce a coating liquid (condensation type silicone resin composition). This coating liquid was applied to the fine porous layer of the porous support to form a coating film (thickness: 500 μm).

Subsequently, the coating film was cured by heating at 90°C for 20 minutes to produce a separation functional layer having a thickness of 50 μm. A pervaporation membrane of Example 1 was obtained in this manner.

(Example 2)

First, RS-50 (a laminate composed of a fine porous PVDF layer and a non-woven PET fabric) manufactured by Nitto Denko Corporation was prepared, and then the surface of the fine porous layer was subjected to a corona treatment. The corona treatment was performed at an output of 0.16 kW, a table travel speed of 3 m/min, and an amount of discharge of 200 W·min/$m^2$. Next, a vinyltrimethoxysilane-including composition (Primer No. 4 manufactured by Shin-Etsu Silicones) as the compound C1 was diluted to 10 times with toluene (manufactured by FUJIFILM Wako Pure Chemical Corporation; special grade), and the diluted composition was applied to the fine porous layer to an application thickness of 50 μm to give a coating film. The coating film was dried at 25°C for 20 minutes to form a primer layer having a thickness of approximately 0.1 μm. A porous support including a main portion, a fine porous layer, and a primer layer was obtained in this manner.

Next, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). This coating liquid was applied to the primer layer of the porous support to form a coating film (thickness: 500 μm).

Subsequently, the coating film was cured by heating at 90°C for 20 minutes to produce a separation functional layer having a thickness of 50 μm. A pervaporation membrane of Example 2 was obtained in this manner.

(Example 3)

First, RS-50 (a laminate composed of a fine porous PVDF layer and a non-woven PET fabric) manufactured by Nitto Denko Corporation was prepared as a porous support. The surface of the fine porous layer of the porous support was subjected to a corona treatment. The corona treatment was performed at an output of 0.16 kW, a table travel speed of 3 m/min, and an amount of discharge of 200 W·min/$m^2$.

Next, 54 g of toluene (manufactured by FUJIFILM Wako Pure Chemical Corporation; special grade) as a dilute solvent, 1 g of a platinum-based catalyst (CAT-PL-50T manufactured by Shin-Etsu Chemical Co., Ltd.) as a curing catalyst, and 5 g of a vinyltrimethoxysilane-including composition (Primer No. 4 manufactured by Shin-Etsu Silicones) as the compound C1 were added to 100 g of a silicone resin composition (KS-847T manufactured by Shin-Etsu Chemical Co., Ltd.; toluene solution; solids: 30 wt%) to produce a coating liquid (addition type silicone resin composition). This coating liquid was applied to the fine porous layer of the porous support to form a coating film (thickness: 500 μm).

Subsequently, the coating film was cured by heating at 90°C for 20 minutes to produce a separation functional layer having a thickness of 50 μm. A pervaporation membrane of Example 3 was obtained in this manner.

(Example 4)

First, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). Next, the coating liquid was applied to a release liner (MRE38 manufactured by Mitsubishi Chemical Corporation) to form a coating film (thickness: 500 μm).

Subsequently, the coating film was cured by heating at 90°C for 20 minutes to produce a separation functional layer having a thickness of 50 μm. The surface of the separation functional layer was subjected to a corona treatment. The corona treatment was performed at an output of 0.16 kW, a table travel speed of 3 m/min, and an amount of discharge of 200 W·min/$m^2$.

Next, a non-woven PET fabric was prepared as a porous support. To a surface of the porous support was applied an aqueous solution containing 0.5 wt% molecular bonding compound (N,N'-bis(2-aminoethyl)-6-(3-trihydroxysilylpropyl) amino-1,3,5-triazine-2,4-diamine manufactured by Sulfur Chemical Laboratory Inc.). The porous support was placed on the separation functional layer such that the surface treated with the aqueous solution was in contact with the separation functional layer. The resulting laminate was heated at 90°C for 10 minutes. The surface of the porous support and the silicone resin included in the separation functional layer were thereby bonded to each other via the molecular bonding compound. The release liner was removed to give a pervaporation membrane of Example 4.

(Example 5)

First, 15 g of a silica filler (AEROSIL RX 50 manufactured by Nippon Aerosil Co., Ltd.), 87 g of toluene (manufactured by FUJIFILM Wako Pure Chemical Corporation; special grade) as a dilute solvent, and 0.5 g of a platinum-based catalyst (CAT-PL-50T manufactured by Shin-Etsu Chemical Co., Ltd.) as a curing catalyst were added to 50 g of a silicone resin composition (KS-847T manufactured by Shin-Etsu Chemical Co., Ltd.; toluene solution; solids: 30 wt%) to produce a coating liquid (addition type silicone resin composition). The silica filler had a surface modified with a trimethylsilyl (TMS) group. Then, the coating liquid was applied to a porous support to form a coating film (thickness: 500 μm). As the porous support was used RS-50 (a laminate composed of a fine porous PVDF layer and a non-woven PET fabric) manufactured by Nitto Denko Corporation. The coating film was formed on the fine porous PVDF layer of the RS-50.

Subsequently, the coating film was cured by heating at 90°C for 20 minutes to produce a separation functional layer having a thickness of 50 μm. The content of the filler in the separation functional layer was 50 wt%. A pervaporation membrane of Example 5 was obtained in this manner.

(Example 6)

A pervaporation membrane of Example 6 was obtained in the same manner as in Example 5, except that a high-silica zeolite filler (HiSiv 3000 manufactured by UNION SHOWA K.K.) was used instead of the silica filler.

(Example 7)

First, a laminate composed of a fine porous layer made of polysulfone and a non-woven fabric made of PET was prepared as a porous support. Next, 50 g of a silicone resin composition (KE-1935B manufactured by Shin-Etsu Chemical

Co., Ltd.) was added to 50 g of a silicone resin composition (KE-1935A manufactured by Shin-Etsu Chemical Co., Ltd.) to give a coating liquid (addition type silicone resin composition). This coating liquid was of a solvent-free type which is free of a solvent. Then, the coating liquid was applied to the fine porous layer of the porous support to form a coating film (thickness: 70 μm).

Subsequently, the coating film was cured by heating at 150°C for 10 minutes to produce a separation functional layer having a thickness of 50 μm. A pervaporation membrane of Example 7 was obtained in this manner.

(Example 8)

First, RS-50 (a laminate composed of a fine porous PVDF layer and a non-woven PET fabric) manufactured by Nitto Denko Corporation was prepared as a porous support. Next, 54 g of toluene (manufactured by FUJIFILM Wako Pure Chemical Corporation; special grade) as a dilute solvent and 1 g of a platinum-based catalyst (CAT-PL-50T manufactured by Shin-Etsu Chemical Co., Ltd.) as a curing catalyst were added to 100 g of a silicone resin composition (KS-847T manufactured by Shin-Etsu Chemical Co., Ltd.; toluene solution; solids: 30 wt%) to produce a coating liquid (addition type silicone resin composition). This coating liquid was applied to the fine porous layer of the porous support to form a coating film (thickness: 500 μm).

Subsequently, the coating film was cured by heating at 90°C for 20 minutes to produce a separation functional layer having a thickness of 50 μm. A pervaporation membrane of Example 8 was obtained in this manner.

(Example 9)

A pervaporation membrane of Example 9 was obtained in the same manner as in Example 7, except that 4 g of a silicone resin composition (CAT-RG manufactured by Shin-Etsu Chemical Co., Ltd.; curing agent) including the polyorganosiloxane P4 having a hydrosilyl group and 10 g of a silica filler (AEROSIL RX 50 manufactured by Nippon Aerosil Co., Ltd.) were added to 40 g of a silicone resin composition (KE-106 manufactured by Shin-Etsu Chemical Co., Ltd.; primary component) including the polyorganosiloxane P3 having an alkenyl group to produce a coating liquid (addition type silicone resin composition). In Example 9, the coating liquid was of a solvent-free type which is free of a solvent. The polyorganosiloxane P4 functioned as a crosslinking agent.

(Example 10)

A pervaporation membrane of Example 10 was obtained in the same manner as in Example 7, except that 4 g of a silicone resin composition (CAT-106F manufactured by Shin-Etsu Chemical Co., Ltd.; curing agent) including the polyorganosiloxane P4 having a hydrosilyl group and 10 g of a silica filler (AEROSIL RX 50 manufactured by Nippon Aerosil Co., Ltd.) were added to 40 g of a silicone resin composition (KE-106F manufactured by Shin-Etsu Chemical Co., Ltd.; primary component) including the polyorganosiloxane P3 having an alkenyl group to produce a coating liquid (addition type silicone resin composition). In Example 10, the coating liquid was of a solvent-free type which is free of a solvent. Note that the polyorganosiloxane P4 functioned as a crosslinking agent. The weight ratio P4/P3 of the polyorganosiloxane P4 to the polyorganosiloxane P3 was 10 wt%.

(Example 11)

A pervaporation membrane of Example 11 was obtained in the same manner as in Example 7, except that 4.5 g of a silicone resin composition (Sylgard 184 manufactured by Dow Corning Toray Co., Ltd.; curing agent) including the polyorganosiloxane P4 having a hydrosilyl group, and 5 g of a silica filler (AEROSIL RX 50 manufactured by Nippon Aerosil Co., Ltd.) were added to 45 g of a silicone resin composition (Sylgard 184 manufactured by Dow Corning Toray Co., Ltd.; primary component) including the polyorganosiloxane P3 having an alkenyl group to produce a coating liquid (addition type silicone resin composition). In Example 11, the coating liquid was of a solvent-free type which is free of a solvent. Note that the polyorganosiloxane P4 functioned as a crosslinking agent. The weight ratio P4/P3 of the polyorganosiloxane P4 to the polyorganosiloxane P3 was 10 wt%.

(Example 12)

A pervaporation membrane of Example 12 was obtained in the same manner as in Example 11, except that the weight ratio P4/P3 of the polyorganosiloxane P4 to the polyorganosiloxane P3 was changed to 3.3 wt%.

(Example 13)

A pervaporation membrane of Example 13 was obtained in the same manner as in Example 12, except that the silica filler was not used.

[Adhesion strength]

For each pervaporation membrane produced, the adhesion strength between the separation functional layer and the porous support was measured with SAICAS by the above method.

[Test 3]

Each pervaporation membrane produced was subjected to Test 3 (roll drawing mock test) above, and whether the separation functional layer had peeled off the porous support was visually examined.

[Peeling strength A1]

Each pervaporation membrane produced was subjected to Test 1 above to measure the peeling strength A1 thereof. As a tensile tester was used Autograph AGS-50NX manufactured by Shimadzu Corporation. As for Examples 1 to 4, the separation functional layer was fixed sufficiently firmly to the porous support and thus could not be peeled off the porous support by hand; the separation functional layer was broken by attempting to forcibly peel the separation functional layer off. For these Examples, the strength at break B1 of the separation functional layer was determined by the above method. As described above, the peeling strength A1 can be considered a value equal to or greater than the strength at break B1.

[PV performance]

For each pervaporation membrane produced, the separation factor $\alpha$ for n-butanol (BuOH) with respect to water was measured by the following method. First, the pervaporation membrane was cut to a diameter of 74 mm to give a test piece being a flat membrane. The test piece was set in a batch-type membrane separation device (cell). A liquid mixture consisting of n-butanol (BuOH) and water was supplied to a feed space of the cell. The content of BuOH in the liquid mixture was 1.0 wt%.

Next, the cell was immersed in a water bath, and the temperature of the liquid mixture was adjusted at 30°C. Then, the pressure in the permeation space was reduced to 15 hPa while the liquid mixture was being stirred using a stirrer in the cell. Consequently, the liquid mixture permeated through the pervaporation membrane, and a gaseous permeated fluid was obtained. Using a liquid nitrogen cold trap, the gaseous permeated fluid was cooled to be condensed. The composition of the liquid permeated fluid was analyzed by gas chromatography, and the separation factor $\alpha$ was calculated from the analysis result.

[Immersion test]

Each pervaporation membrane produced was subjected to an immersion test by the following method. First, a liquid mixture consisting of n-butanol and water was prepared. The content of n-butanol in the liquid mixture was 1.0 wt%, and the liquid mixture had a temperature of 80°C. The pervaporation membrane was immersed in the liquid mixture for three weeks. After the immersion of the pervaporation membrane, whether the separation functional layer had peeled off the porous support was visually examined.

[Table 1]

| | Separation functional layer | | | Porous support | | Adhesion strength [kN/m] | Test 3 | Peeling strength A1 [N/20 mm] | PV performance | Immersion test |
|---|---|---|---|---|---|---|---|---|---|---|
| | Silicone resin composition | Curing reaction | Additive | Substrate | Additional treatment | | Peeling | | Separation factor α | Peeling |
| Ex. 1 | YSR3022 | Condensation | - | RS50 (Corona-treated) | - | 0.055 | No | 1 (*1) | 26.1 | No |
| Ex. 2 | KS847T | Addition | - | RS50 (Corona-treated) | Primer No. 4 | 0.086 | No | 1 (*1) | 16.2 | No |
| Ex. 3 | KS847T | Addition | Primer No. 4 | RS50 (Corona-treated) | - | 0.055 | No | 1 (*1) | 23.0 | No |
| Ex. 4 | KS847T (Corona-treated) | Addition | - | Non-woven PET fabric | Molecular bonding compound | 0.0272 | No | 1 (*1) | 23.2 | No |
| Ex. 5 | KS847T | Addition | RX50 | RS50 | - | - | No | 0.61 | 32.2 | No |
| Ex. 6 | KS847T | Addition | HiSiv 3000 | RS50 | - | 0.0252 | No | 0.25 | 29.6 | No |
| Ex. 7 | KE1935 | Addition | - | Fine porous polysulfone layer<br>Non-woven PET fabric | - | - | No | 0.74 | 20.3 | No |
| Ex. 8 | KS847T | Addition | - | RS50 | - | 0.0076 | Yes | 0.10 | 20.2 | Partial |

(*1) Strength at break B1 of separation functional layer

[Table 2]

| | Separation functional layer | | | | Porous support | | Test 3 | Peeling strength A1 [N/20 mm] | PV performance | Immersion test |
|---|---|---|---|---|---|---|---|---|---|---|
| | Silicone resin composition | Curing reaction | Additive | Weight ratio P4/P3 [wt%] | Substrate | Additional treatment | Peeling | | Separation factor α | Peeling |
| Ex. 9 | KE106 | Addition | RX50 | 10 | Fine porous polysulfone layer Non-woven PET fabric | - | No | 0.43 | 39.5 | No |
| Ex. 10 | KE106F | Addition | RX50 | 10 | Fine porous polysulfone layer Non-woven PET fabric | - | No | 0.27 | 33.6 | No |
| Ex. 11 | Sylgard 184 | Addition | RX50 | 10 | Fine porous polysulfone layer Non-woven PET fabric | - | No | 0.28 | 30.5 | No |
| Ex. 12 | Sylgard 184 | Addition | RX50 | 3.3 | Fine porous polysulfone layer Non-woven PET fabric | - | No | 0.89 | 31.0 | No |
| Ex. 13 | Sylgard 184 | Addition | - | 3.3 | Fine porous polysulfone layer Non-woven PET fabric | - | No | 0.49 | 23.3 | No |

See below for the abbreviations in Tables 1 and 2.

YSR3022: Silicone resin composition (YSR3022 manufactured by Momentive Performance Materials Japan LLC.)
KS847T: Silicone resin composition (KS-847T manufactured by Shin-Etsu Chemical Co., Ltd.)
KE1935: Silicone resin composition (KE-1935 manufactured by Shin-Etsu Chemical Co., Ltd.)
Primer No. 4: Vinyltrimethoxysilane-including composition (Primer No. 4 manufactured by Shin-Etsu Silicones)
RX50: Silica filler (AEROSIL RX 50 manufactured by Nippon Aerosil Co., Ltd.; surface modifying group: trimethylsilyl (TMS) group)
HiSiv3000: High-silica zeolite filler (HiSiv 3000 manufactured by UNION SHOWA K.K.)
RS50: Laminate (RS-50 manufactured by Nitto Denko Corporation) composed of a fine porous PVDF layer and a non-woven PET fabric
Molecular bonding compound: N,N'-bis(2-aminoethyl)-6-(3-trihydroxysilylpropyl)amino-1,3,5-triazine-2,4-diamine manufactured by Sulfur Chemical Laboratory Inc.
KE106: Silicone resin composition (KE-106 manufactured by Shin-Etsu Chemical Co., Ltd.)
KE106F: Silicone resin composition (KE-106F manufactured by Shin-Etsu Chemical Co., Ltd.)
Sylgard 184: Silicone resin composition (Sylgard 184 manufactured by Dow Corning Toray Co., Ltd.)

As can be understood from Tables 1 and 2, the peeling strength A1 was 0.15 N/20 mm or more for Examples 1 to 7 and 9 to 13. For these pervaporation membranes, peeling of the separation functional layer off the porous support was unable to be visually confirmed in Test 3 (roll drawing mock test). From these results, it is inferred that if a wound body is produced using each of the pervaporation membranes of Examples 1 to 7 and 9 to 13 and the pervaporation membrane was drawn from the wound body, peeling of the separation functional layer off the porous support will be sufficiently inhibited. On the other hand, for the pervaporation membrane of Example 8 whose peeling strength A1 is lower than 0.15 N/20 mm, peeling of the separation functional layer off the porous support was confirmed in Test 3.

For Examples 5 and 10, production of a pervaporation membrane by roll-to-roll processing was actually performed. Specifically, a pervaporation membrane was produced by the following method. First, a wound body of a porous support as used in each Example was prepared, and the porous support having a long length was drawn from the wound body. While the porous support was being conveyed at a line speed of 0.8 m/min and a tension of 20 N, the coating liquid as used in each Example was applied to the porous support. The applied coating liquid was cured by heating to give a pervaporation membrane. The pervaporation membrane was wound to produce a wound body. The pervaporation membrane was drawn from the wound body, and whether the separation functional layer had peeled off the porous support was visually examined. For both Examples 5 and 10, peeling of the separation functional layer off the porous support was unable to be visually confirmed, i.e., peeling was sufficiently inhibited.

In addition, according to the immersion test results, the separation functional layer of each of the pervaporation membranes of Examples 1 to 7 and 9 to 13 is less likely to peel off the porous support even after a process of separating a volatile organic compound from an aqueous solution containing the organic compound is performed for a long period of time.

INDUSTRIAL APPLICABILITY

The pervaporation membrane of the present embodiment is suitable for separating a volatile organic compound from an aqueous solution containing the organic compound.

## Claims

1. A pervaporation membrane comprising:

   a separation functional layer including a silicone resin; and
   a porous support supporting the separation functional layer, wherein
   a peeling strength measured by a test below is 0.15 N/20 mm or more.
   Test: The pervaporation membrane is cut to 20 mm in width and 150 mm in length to give a test piece. The separation functional layer of the test piece is peeled off the porous support of the test piece at a peel angle of 180° and a tensile speed of 300 mm/min.

2. The pervaporation membrane according to claim 1, wherein the peeling strength is 0.5 N/20 mm or more.

3. The pervaporation membrane according to claim 1, wherein an adhesion strength between the separation functional

layer and the porous support is 0.01 kN/m or more, the adhesion strength being measured with SAICAS (Surface And Interfacial Measuring Analysis System).

**4.** The pervaporation membrane according to claim 1, wherein the porous support has a surface facing the separation functional layer, the surface being modified by a surface modification treatment.

**5.** The pervaporation membrane according to claim 4, wherein the surface modification treatment is a corona treatment.

**6.** The pervaporation membrane according to claim 4, wherein the silicone resin is formed from a condensation type silicone resin composition.

**7.** The pervaporation membrane according to claim 1, wherein

the porous support includes a primer layer in direct contact with the separation functional layer, and
the primer layer is bonded to the silicone resin.

**8.** The pervaporation membrane according to claim 7, wherein the silicone resin is formed from an addition type silicone resin composition.

**9.** The pervaporation membrane according to claim 1, wherein

the silicone resin is formed from a silicone resin composition including a polyorganosiloxane, and
the silicone resin composition includes a compound including: a reactive group F1 capable of reacting with the polyorganosiloxane; and a reactive group F2 capable of reacting with a surface of the porous support, the surface facing the separation functional layer.

**10.** The pervaporation membrane according to claim 1, wherein

the porous support has a surface facing the separation functional layer and including a plurality of opening portions, and
an average diameter of the plurality of opening portions is 0.5 $\mu$m or more.

**11.** The pervaporation membrane according to claim 10, wherein the surface is bonded to the silicone resin.

**12.** The pervaporation membrane according to claim 1, wherein the separation functional layer further includes a filler.

**13.** The pervaporation membrane according to claim 12, wherein the filler includes at least one selected from the group consisting of zeolite and silica.

**14.** The pervaporation membrane according to claim 1, wherein

the porous support includes a main portion and a fine porous layer placed on the main portion, and
the fine porous layer includes polysulfone.

**15.** The pervaporation membrane according to claim 14, wherein
the silicone resin is formed from a silicone resin composition having a solvent content of 10 wt% or less.

**16.** The pervaporation membrane according to claim 1 configured to be used to separate a volatile organic compound from an aqueous solution containing the organic compound.

**17.** The pervaporation membrane according to claim 16, wherein the organic compound is a fermented product generated by a microorganism.

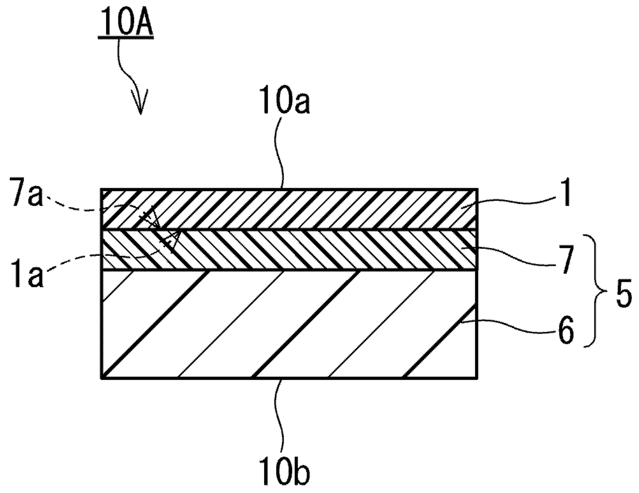


FIG.1A

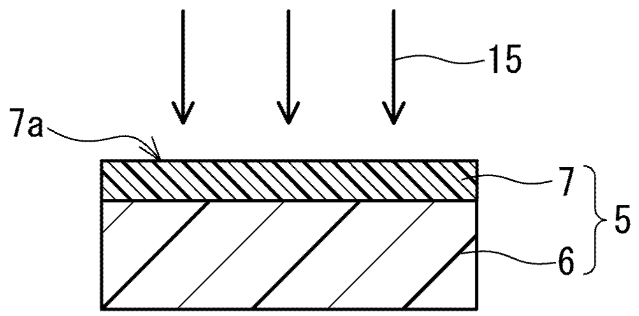


FIG.1B

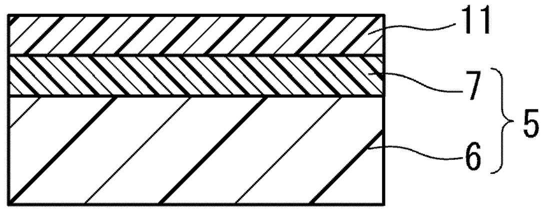


FIG.1C

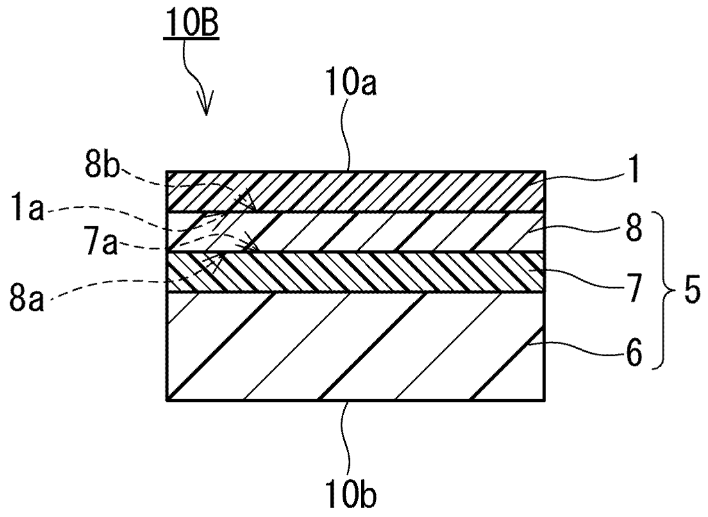


FIG.2A

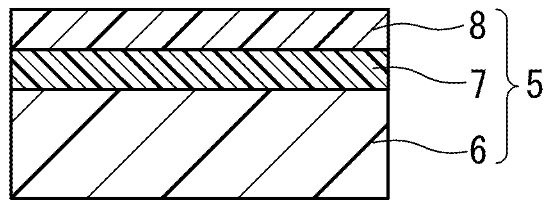


FIG.2B

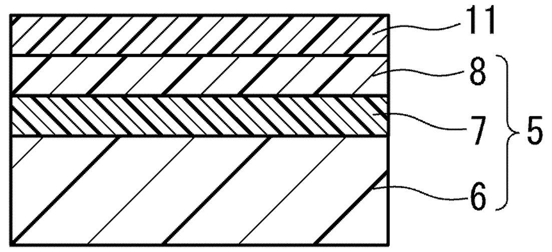


FIG.2C

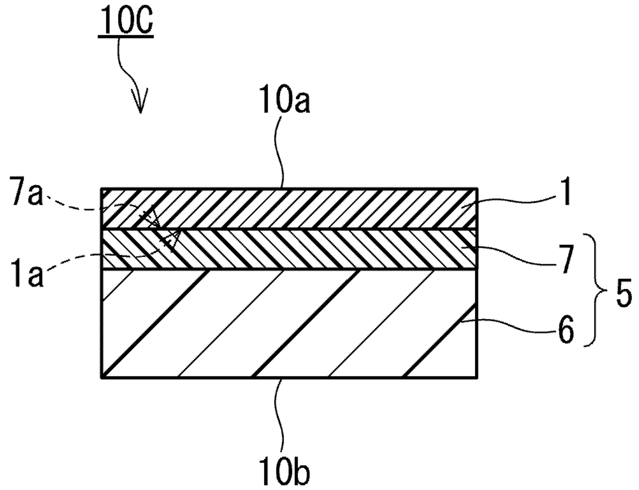


FIG.3

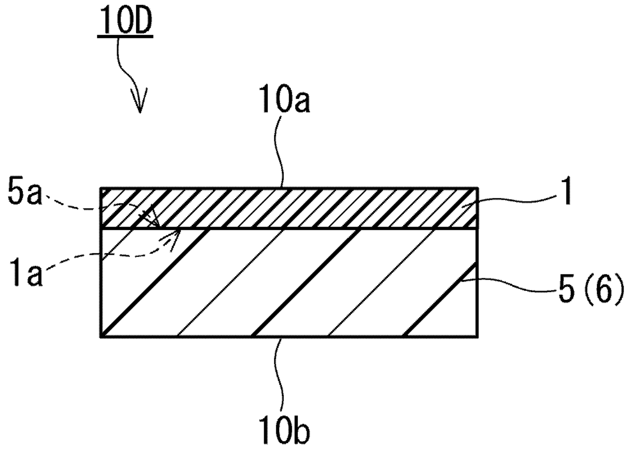


FIG.4A

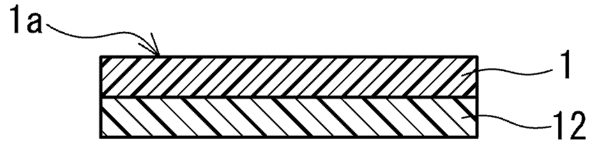


FIG.4B

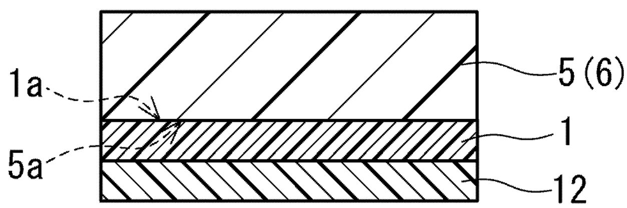


FIG.4C

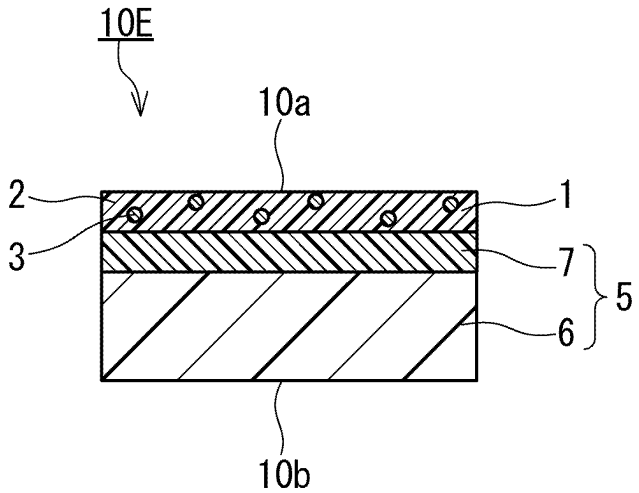


FIG.5

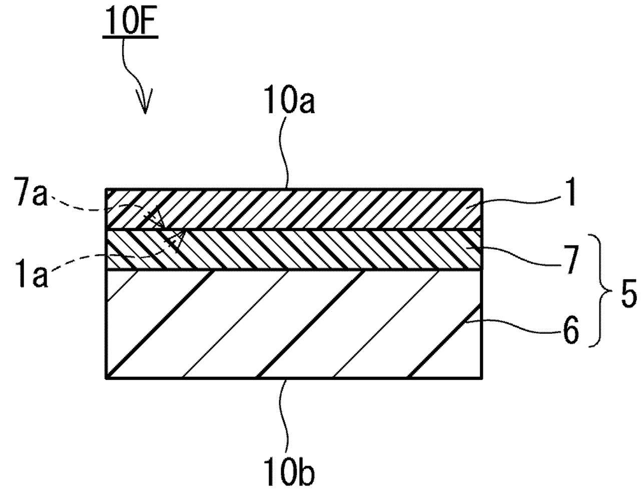


FIG.6

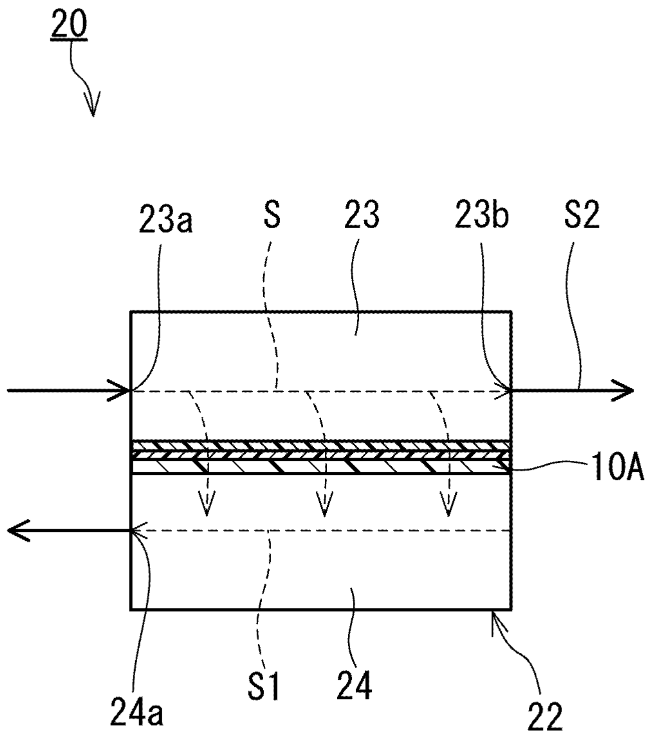


FIG.7

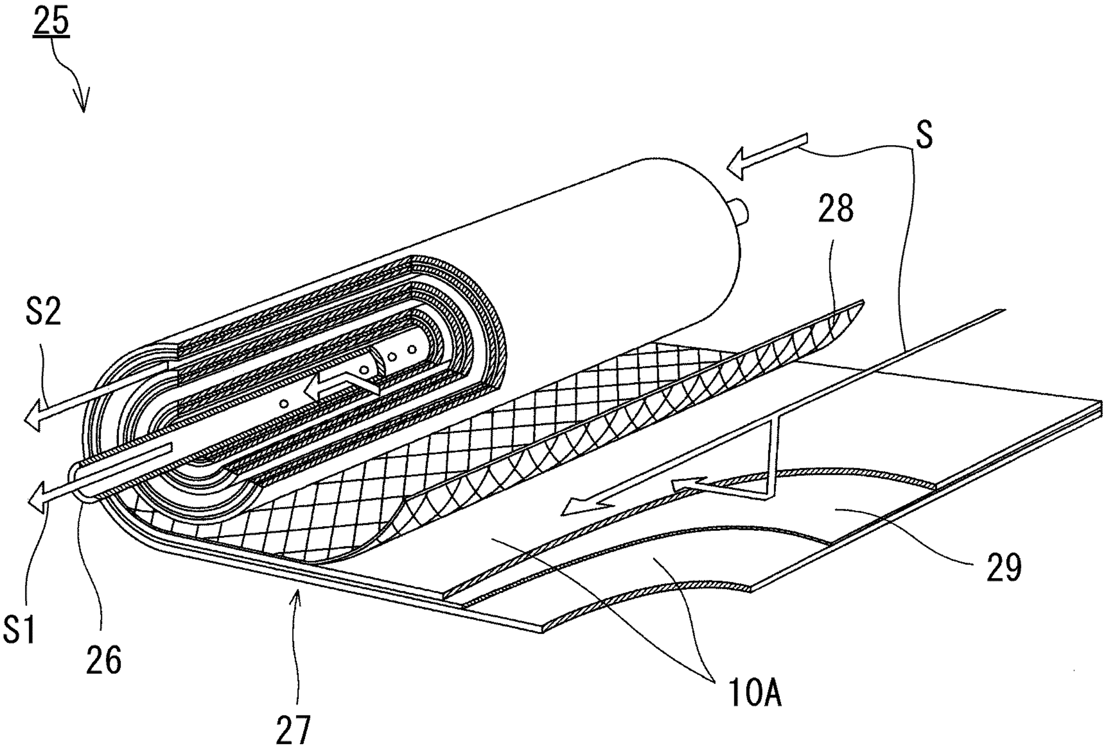


FIG.8

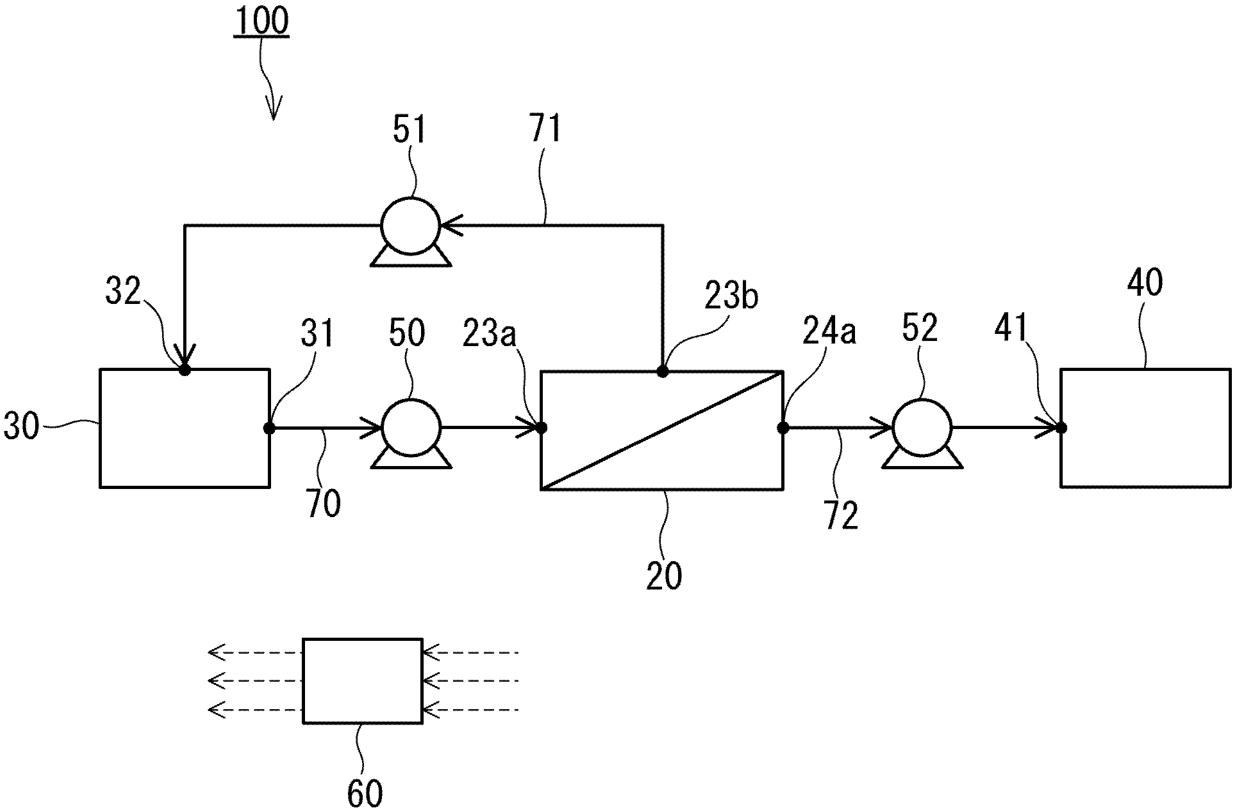


FIG.9

## INTERNATIONAL SEARCH REPORT

International application No.
**PCT/JP2023/032765**

**A. CLASSIFICATION OF SUBJECT MATTER**

***B01D 61/36***(2006.01)i; ***B01D 65/10***(2006.01)i; ***B01D 69/00***(2006.01)i; ***B01D 69/02***(2006.01)i; ***B01D 69/10***(2006.01)i; ***B01D 69/12***(2006.01)i; ***B01D 71/02***(2006.01)i; ***B01D 71/68***(2006.01)i; ***B01D 71/70***(2006.01)i; ***B32B 5/18***(2006.01)i; ***B32B 27/00***(2006.01)i; ***B32B 7/06***(2019.01)i

FI: B01D71/70; B01D61/36; B01D69/02; B01D69/10; B01D69/12; B01D71/02; B01D71/68; B32B27/00 101; B32B5/18; B32B7/06; B01D65/10; B01D69/00

According to International Patent Classification (IPC) or to both national classification and IPC

**B. FIELDS SEARCHED**

Minimum documentation searched (classification system followed by classification symbols)

B01D53/22; B01D61/00-71/82; C02F1/44; B32B1/00-43/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-302359 A (LG CHEMICAL CO LTD) 18 December 2008 (2008-12-18) claims, paragraphs [0005], [0008], [0012]-[0020] | 1-4, 6-8, 10-11, 14-16 |
| Y | claims, paragraphs [0005], [0008], [0012]-[0020] | 5, 9, 12-14, 17 |
| X | JP 2018-83193 A (NITTO DENKO CORP) 31 May 2018 (2018-05-31) claims, paragraphs [0066]-[0080] | 1-4, 6-8, 10-11, 15-16 |
| Y | claims, paragraphs [0066]-[0080] | 5, 9, 12-14, 17 |
| X | US 2012/0080147 A1 (THE UNITED STATES OF AMERICA, AS REPRESENTED BY THE SECRETARY OF AGRICULTURE) 05 April 2012 (2012-04-05) claims, paragraphs [0012], [0043]-[0060], examples | 1-4, 6-13, 15-17 |
| Y | claims, paragraphs [0012], [0043]-[0060], examples | 5, 9, 12-14, 17 |
| Y | JP 2011-235241 A (SEKISUI CHEMICAL CO LTD) 24 November 2011 (2011-11-24) claims, paragraph [0034] | 5 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 November 2023** | **21 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/032765**

| Patent document cited in search report | Publication date (day/month/year) | Patent family member(s) | Publication date (day/month/year) |
|---|---|---|---|
| JP 2008-302359 A | 18 December 2008 | JP 2003-535683 A | |
| | | US 2004/0213985 A1 claims, paragraphs [0008], [0011], [0025]-[0036] | |
| | | WO 2001/097957 A1 | |
| | | EP 1324817 A1 | |
| | | KR 10-2002-0001035 A | |
| | | TW 572775 B | |
| | | CN 1383390 A | |
| JP 2018-83193 A | 31 May 2018 | US 2019/0314768 A1 claims, paragraphs [0090]-[0106] | |
| | | WO 2018/092858 A1 | |
| | | EP 3542891 A1 | |
| | | CN 109982772 A | |
| US 2012/0080147 A1 | 05 April 2012 | WO 2012/050730 A2 | |
| JP 2011-235241 A | 24 November 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4899122 B


### Non-patent literature cited in the description


- Hansen Solubility Parameters. A Users Handbook. CRC Press, 2007